# EUROPÄISCHE PATENTSCHRIFT

(11) **EP 0 428 652 B1**
(45) Veröffentlichungstag und Bekanntmachung des Hinweises auf die Patenterteilung: **06.08.1997**
(21) Anmeldenummer: 90906907.2
(22) Anmeldetag: 23.05.1990
(51) Int. Cl.: B63H 11/04, H02K 44/04, H02K 31/02

(54) **VERFAHREN UND VORRICHTUNG ZUM ANTREIBEN VON WASSERFAHRZEUGEN**
PROCESS AND DEVICE FOR MARINE PROPULSION
PROCEDE ET DISPOSITIF POUR LA PROPULSION DE NAVIRES

(30) Priorität: 24.05.1989 DE 3916882; 03.10.1989 DE 3932918
(43) Veröffentlichungstag der Anmeldung: 29.05.1991
(73) Patentinhaber: LAUKIEN, Günther, Prof. Dr., D-76287 Rheinstetten (DE)
(72) Erfinder: LAUKIEN, Günther, D-7512 Rheinstetten-Forchheim (DE); KASTEN, Arne, D-7500 Karlsruhe 1 (DE); WESTPHAL, Michael, D-6745 Offenbach (DE)
(74) Vertreter: KOHLER SCHMID + PARTNER
(86) Internationale Anmeldenummer: DE9000379
(87) Internationale Veröffentlichungsnummer: WO9014265

(56) Entgegenhaltungen:
- DE-A- 2 529 471
- DE-A- 3 518 883
- DE-C- 873 362
- DE-C- 888 515
- FR-A- 2 112 791
- US-A- 2 905 089
- US-A- 3 030 888
- US-A- 3 662 554
- US-A- 4 514 653
- Transactions of the North East Coast Institution of Engineers and Shipbuilders, Band 92, Nr. 5, Mai 1976, the North East Coast Institution of Engineers and Shipbuilders, (Newcastle Upon Tyne, GB), A.D. APPLETON: "The Role of Superconducting D.C. Machines for Marine Propulsion Systems", seiten 111-112

## Beschreibung

Die Erfindung betrifft ein Verfahren zum Antreiben von Wasserfahrzeugen, bei dem in einem von Umgebungswasser durchströmten Rohr ein magnetisches Feld sowie ein elektrisches Feld mit aufeinander im wesentlichen senkrecht stehenden Feldlinien erzeugt werden, derart, daß auf in dem Umgebungswasser befindliche Ladungsträger eine Kraft ausgeübt und diese Kraft als Antriebskraft für das Wasserfahrzeug genutzt wird.

Die Erfindung betrifft ferner ein Wasserfahrzeug mit einem Schiffsrumpf und einer am Schiffsrumpf angeordneten magnetohydrodynamischen Antriebsvorrichtung, die ein von Umgebungswasser durchströmtes Rohr umfaßt, wobei das Rohr von einer Magnetspule umgeben und in dem Rohr mindestens eine mit einer Spannungsquelle verbundene erste Elektrode angeordnet ist.

Ein Verfahren und eine Vorrichtung der vorstehend genannten Art sind aus der GB-Z "Maritime Defense, The Journal of International Naval Technology", 12/1988, Seite 445, bekannt.

Es ist bei sogenannten magnetohydrodynamischen Antrieben bekannt, einem Medium, das bewegliche Ladungsträger enthält, sowohl ein elektrisches wie auch ein magnetisches Feld aufzuprägen. Infolge des einwirkenden elektrischen Feldes geraten die Ladungsträger in Bewegung, und es wird dann infolge der Bewegung der Ladungsträger im magnetischen Feld auf die Ladungsträger die sogenannte Lorentz-Kraft ausgeübt, die sich aus dem Kreuzprodukt der Vektoren des magnetischen Feldes und der Geschwindigkeit in bekannter Weise ergibt.

Es ist auch, wie vorstehend erwähnt, bei Wasserfahrzeugen bekannt, derartige magnetohydrodynamische Antriebe zu verwenden. Bei der eingangs genannten bekannten Anordnung ist das Rohr von zwei symmetrisch zur Rohrachse angeordneten supraleitenden Sattelspulen umgeben. Die Sattelspulen erzeugen damit ein magnetisches Feld, dessen Richtung senkrecht zur Rohrachse verläuft. Im Rohr sind zwei kondensatorartige Plattenelektroden in axialer Richtung angeordnet, so daß das von diesen Plattenelektroden erzeugte magnetische Feld ebenfalls senkrecht zur Achsrichtung, aber auch senkrecht zur Richtung des magnetischen Feldes verläuft. Dies hat zur Folge, daß den im Rohr befindlichen freien Ladungsträgern des Umgebungswassers, nämlich den Ionen des Salzwassers, eine Lorentz-Kraft mitgeteilt wird, die in Axialrichtung des Rohres verläuft. Die bekannte Anordnung erzeugt somit eine Rückstoßkraft, die von den im Rohr axial bewegten Ladungsträgern herrührt. Bei der bekannten Vorrichtung zum Antreiben eines Wasserfahrzeuges wird mit den Sattelspulen eine Magnetfeldstärke von 2 T mit einem Strom von 2000 A erzeugt, was zu einer Rückstoßkraft von 8 kN führen soll.

Die physikalischen Grundlagen zum Verständnis derartiger magnetohydrodynamischer Antriebe sind in dem Lehrbuch von Becker/Sauter "Theorie der Elektrizität", 19. Auflage, 1969, Band 1, Seiten 255 bis 266, sowie im Lehrbuch von Pohl "Einführung in die Physik", 20. Auflage, 1967, Band 2, "Elektrizitätslehre", Seiten 98 bis 104, beschrieben.

Bei dem bekannten Verfahren und der bekannten Vorrichtung ist von Vorteil, daß die Antriebseinheit keinerlei bewegliche Elemente benötigt und daher praktisch keine Antriebsgeräusche auftreten. Aufgrund dessen eignen sich derartige Anordnungen auch für militärische Zwecke, insbesondere zum Antreiben von Unterseebooten.

Allerdings ist bei dem bekannten Verfahren und der bekannten Vorrichtung von Nachteil, daß der Wirkungsgrad verhältnismäßig niedrig und der Spulenaufbau verhältnismäßig kompliziert ist. Außerdem ist bei der bekannten Anordnung von Nachteil, daß infolge der verwendeten Sattelspulen ein sehr hohes Streufeld auftritt, so daß Fahrzeuge, die mit der bekannten Antriebsvorrichtung ausgestattet sind, durch magnetische Detektionsmethoden leicht geortet werden können. Außerdem können an Bord des Wasserfahrzeuges befindliche Gerätschaften, insbesondere elektronische Geräte, vom Streufeld der Magnetspule gestört werden.

Aus dem DE-Buch: R. Geissler, Der Schraubenpropeller, Dissertation TU Berlin, Springer 1918, Seite 4/5, 16/17, sind Schraubenpropeller bekannt, die als archimedische Spirale ausgebildet sein können.

Aus der DE-PS 873 362 ist ein Antrieb für Wasserfahrzeuge bekannt, bei dem der Antrieb durch einen Propeller in einem etwa in Fahrzeuglängsrichtung verlaufenden Schacht bewirkt wird. Der Schacht kann dabei die Form eines sich stromabwärts verjüngenden Rohres aufweisen.

Aus der DE-PS 888 515 ist ein Schnellschiff bekannt, das als Tragflügelboot ausgebildet ist. Bei diesem Schnellschiff sind Antriebspropeller im Abstand vom Rumpf angeordnet, und zwar am unteren Ende von Stelzen, auf denen sich der Rumpf des Schnellschiffes bei schneller Fahrt über die Wasseroberfläche erhebt.

Aus der CH-PS 494 672 ist ein Motorboot mit Schraubenantrieb bekannt, bei dem die Schraube in einem vom Bug zum Heck verlaufenden Wasserführungsrohr arbeitet, das in der Längsrichtung des Bootes verläuft.

Aus der DE-OS 35 18 883 ist ein Tragflügelboot, bestehend aus einem Schiffsrumpf mit Gleitelementen bekannt. Bei diesem Tragflügelboot dient mindestens eine Wasserstrahldüse als Antriebseinrichtung.

Aus der DE-PS 858 212 ist eine Dichtung an Schiffsschrauben bekannt. Die Schiffsschrauben sind dabei mit verstellbaren Flügeln versehen.

Aus der DE-Z: Schiff & Hafen, 1989, Nr. 9/10, Seiten 681 bis 684, sind Hochleistungsmotoren für Schiffsantriebe bekannt, bei denen ebenfalls magnetohydrodynamische Antriebe verwendet werden. In diesem Zusammenhang wird auch vorgeschlagen, supraleitende Magnetspulen einzusetzen. In diesem Zusammenhang wird auch vorgeschlagen, hierfür neuere Supraleiter zu verwenden, die bereits bei -200 °C supraleitend werden.

Weiterhin ist es aus der DE-OS 20 52 605 bekannt, bei einem beidseitig offenen und mit Wasser betriebenen Düsenrohr für Wasser-Vortriebsaggregate seitlich einen Wassereintritt zu ermöglichen.

Es ist ferner im Schiffbau allgemein bekannt, ein hydrodynamisches Antriebselement, beispielsweise eine Schraube, von einer Maschine antreiben zu lassen. In diesem Zusammenhang ist es auch bekannt, zum Antrieb eines Schiffs eine Unipolar-Maschine einzusetzen, bei der ein von einem Strom durchflossener Leiter durch ein von einer Magnetspule erzeugtes Magnetfeld bewegt wird, dessen Feldlinien stets im wesentlichen rechtwinklig zur Richtung des Stromes verlaufen.

Eine Vorrichtung der vorstehend genannten Art ist aus einem Vortragsmanuskript von Intichar, L., Erlangen, mit dem Titel "Supraleitende Maschinen" bekannt, das anläßlich eines Vortrages ausgegeben wurde, der im Rahmen eines Seminars "Supraleitungstechnik" am 13. und 14. Mai 1985 in der Schule für Kerntechnik des Kernforschungszentrums Karlsruhe stattfand.

Bei der bekannten Vorrichtung ist an Bord eines Überwasserschiffes ein mechanischer Antrieb, bestehend aus zwei Dieselmaschinen mit mittlerer Geschwindigkeit vorgesehen. Die Dieselmaschinen treiben mechanisch zwei supraleitende Generatoren an, die wiederum elektrisch eine supraleitende Unipolar-Maschine antreiben. Die supraleitende Unipolar-Maschine wiederum treibt in konventioneller Weise über eine Welle eine übliche Schiffsschraube an. Alternativ wird dabei vorgeschlagen, für die supraleitende Maschine entweder eine Unipolar-Maschine vom Scheibentyp mit homogen axial gerichtetem Magnetfeld oder eine Unipolar-Maschine vom Trommeltyp mit radial gerichtetem Magnetfeld einzusetzen.

Bei der bekannten Vorrichtung, die offenbar für zivile Anwendungsbereiche bei überwasserschiffen gedacht ist, wird somit ein wesentlicher möglicher Vorteil einer Unipolar-Maschine verschenkt, nämlich der, daß eine Unipolar-Maschine im Prinzip nur ein einziges bewegtes Teil, nämlich den bewegten Leiter mit dem damit drehverbundenen Antriebselement aufweist, das wiederum die erforderliche Vortriebskraft erzeugt. Bei der bekannten Vorrichtung wird vielmehr eine komplizierte Anordnung mit Dieselmaschinen, supraleitendem Generator und supraleitender Unipolar-Maschine verwendet, die nicht nur äußerst aufwendig ist, sondern darüberhinaus auch durch die Vielzahl periodisch alternierend bewegter Teile, z.B. der Kolben der Dieselmotoren, erhebliche Geräusche erzeugt.

Die bekannte Vorrichtung ist daher nur für die genannten zivilen Anwendungen geeignet.

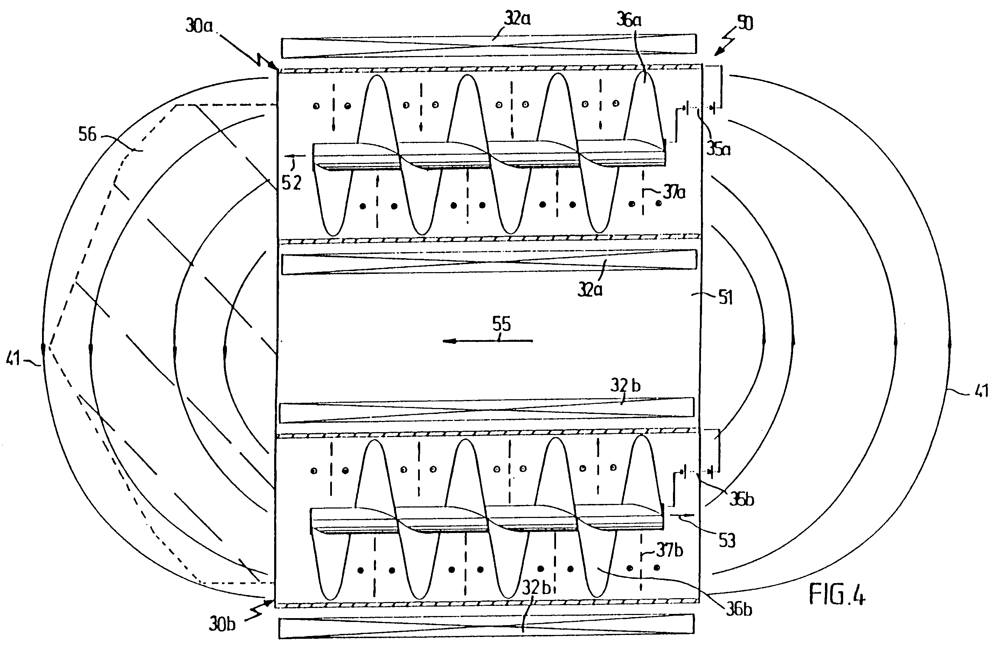

Unipolar-Maschinen sind z.B. aus dem DE-Buch: Moeller/Fricke/Frohne/Vaske, Grundlagen der Elektrotechnik, B.G. Teubner, Stuttgart, 1986, Seiten 187 bis 191, insbesondere Fig. 4.43 bekannt. Unipolar-Maschinen sind aus dem Lehrbuch von Pohl "Einführung in die Physik", 20. Auflage, 1967, Band 2 "Elektrizitätslehre", Seiten 69 und 101, sowie aus dem Lehrbuch von Flegler, Grundgebiete der Elektrotechnik, Seite 219, bekannt.

Der Erfindung liegt demgegenüber die Aufgabe zugrunde, ein Verfahren und ein Wasserfahrzeug der eingangs genannten Art dahingehend weiterzubilden, daß bei kompakter Bauweise der Wirkungsgrad erhöht wird.

Diese Aufgabe wird nach dem eingangs genannten Verfahren dadurch gelöst, daß in dem Rohr ein axial gerichtetes Magnetfeld sowie ein zwischen einer Achse des Rohres und dem Rohr radial gerichtetes elektrisches Feld erzeugt wird und daß das um die Achse umlaufende Umgebungswasser in eine axiale Richtung umgelenkt wird.

Gemäß dem eingangs genannten Wasserfahrzeug wird die der Erfindung zugrundeliegende Aufgabe dadurch gelöst, daß die Magnetspule als Solenoidspule ausgebildet und im wesentlichen koaxial zum Rohr angeordnet ist, daß die erste Elektrode im wesentlichen in der Achse des Rohres angeordnet ist, daß das Rohr als zweite Elektrode geschaltet ist, und daß im Zwischenraum zwischen erster Elektrode und Rohr ein hydrodynamisches Antriebslelement mit Leitelementen angeordnet ist, die eine zur Radialrichtung geneigte Ausrichtung aufweisen, und die starr mit dem Rohr verbindbar sind, derart, daß auf in dem Umgebungswasser befindliche Ladungsträger eine Kraft ausgeübt und diese Kraft als Antriebskraft für das Wasserfahrzeug genutzt wird.

Die der Erfindung zugrundeliegende Aufgabe wird auf diese Weise vollkommen gelöst.

Solenoidspulen haben nämlich im Gegensatz zu Sattelspulen einen erheblich größeren Wirkungsgrad, weil das von der Solenoidspule erzeugte Magnetfeld von der Spule selbst vollkommen umschlossen wird und das Streufeld bei einer derartigen Spule nur sehr gering ist. Außerdem hat eine Solenoidspule, z.B. einen wesentlich einfacheren Aufbau als ein Paar von Sattelspulen, bei denen die Formgebung und damit auch die Halterung der Einzelspulen sehr aufwendig ist. Vor allem ist von Vorteil, daß das hydrodynamische Antriebselement mit den Leitelementen innerhalb der Solenoidspule angeordnet ist. Diese Anordnung ist wesentlich kompakter als eine herkömmliche Anordnung, bei der die Antriebsmaschine und die Schraube in einer Reihe hintereinander angeordnet sind.

Insgesamt ist es daher mit der Erfindung möglich, Antriebseinheiten zu schaffen, die einen wesentlich einfacheren und kompakteren Aufbau haben und bei denen die eingesetzte Energie in weit günstigerem Maße in Antriebsleistung für das Wasserfahrzeug umgesetzt wird.

Aus diesem Grunde eignen sich das erfindungsgemäße Verfahren sowie die erfindungsgemäße Vorrichtung in besonderem Maße zum Antreiben von Unterseebooten, sei es, indem ein Vorschub für eine Marsch- oder Schleichfahrt erzeugt wird, sei es, daß eine Antriebsleistung zum Manövrieren in Tiefenrichtung erzeugt wird.

Diese Maßnahme hat den Vorteil, daß im Rahmen der vorliegenden Erfindung ein MHD-Antrieb Verwendung finden kann, wie er bereits eingangs als an sich bekannt geschildert wurde. Derartige MHD-Antriebe haben den besonderen Vorteil, daß sie keine bewegten Teile umfassen, so daß ein besonders geräuscharmes Fahren möglich ist, wie es gerade im militärischen Bereich gewünscht wird.

Bei weiteren bevorzugten Ausgestaltungen der Erfindung ist an das Rohr eine Ionisiereinheit angeschlossen, beispielsweise wird dem Umgebungswasser eine dessen Leitfähigkeit erhöhende Substanz zugegeben.

Diese Maßnahme hat den Vorteil, daß durch Erhöhung der Ionenkonzentration auch die Antriebskraft erhöht wird. Es versteht sich dabei, daß die Ionisiereinheit in diesem Fall auch kurzzeitig eingesetzt werden kann, um im Beispielsfalle eines militärisch genutzten Wasserfahrzeuges für kurzzeitige Angriffs- oder Absetzfahrten die Antriebskraft zu erhöhen.

Bei weiteren Ausgestaltungen der Erfindung sind die Leitelemente drehbar gelagert und an einen Antriebsmotor anschließbar.

Auch diese Maßnahme hat den Vorteil, daß die Antriebskraft, sei es im Dauerbetrieb oder sei es nur kurzzeitig, erhöht werden kann, wenn die Leitelemente entgegen der auf sie einwirkenden Ladungsträger-Kraft gedreht werden.

Weiterhin sind noch Ausführungsbeispiele der Erfindung bevorzugt, bei denen die auf die Ladungsträger ausgeübte Kraft in Abhängigkeit vom radialen Abstand von der Elektrode einstellbar ist, beispielsweise indem der Verlauf der elektrischen Feldstärke oder der Neigungswinkel der Leitelemente in Abhängigkeit vom radialen Abstand von der Elektrode variiert wird.

Diese Maßnahme hat den Vorteil, daß der natürlichen Abhängigkeit der Feldstärke vom Radius bei der erfindungsgemäßen Zylinderkondensatoranordnung entgegengewirkt wird, damit Turbulenzen und Kavitationen infolge unterschiedlich wirkender Lorentz-Kräfte vermieden werden.

Bei weiteren bevorzugten Ausführungsbeispielen der Erfindung sind Elektroden im Streufeld der Magnetspule angeordnet.

Diese Maßnahme hat den Vorteil, daß auch das von der Spule ausgehende Magnetfeld zum Erzeugen eines Vortriebes genutzt wird. In vorteilhafter Weise macht man sich in diesem Falle die Tatsache zunutze, daß die Feldlinien des Streufeldes einerseits in einer Ebene verlaufen, in der auch die Achse der Fahrtrichtung liegt, die Feldlinien aber andererseits im wesentlichen senkrecht zur Fahrtrichtung verlaufen. Man kann daher die zusätzlichen Elektroden parallel zu der genannten Ebene anordnen, so daß die resultierende Vortriebskraft gerade in der Fahrtrichtung des Wasserfahrzeuges liegt. Diese Anordnung der Elektroden ist strömungstechnisch besonders günstig, weil die derart gestalteten Elektroden nur einen vernachlässigbar geringen Strömungswiderstand haben.

Bei einer weiteren, besonders bevorzugten Gruppe von Ausführungsbeispielen der Erfindung hat das Rohr einen sich in Strömungsrichtung des Wassers vergrößernden Querschnitt.

Diese Maßnahme hat den Vorteil, daß bei konstantem Durchsatz die Strömungsgeschwindigkeit am Ausgang des Rohres niedrig eingestellt werden kann, so daß auf diese Weise Turbulenzen am Austritt des Rohres ebenfalls weitgehend vermieden werden können.

Besonders bevorzugt ist bei diesem Ausführungsbeispiel, wenn das Rohr mit seitlichen Ansaugöffnungen versehen ist.

Diese Maßnahme hat nämlich den Vorteil, daß die den Wassermolekülen über die axiale Länge des Rohres mitgeteilte Kraft bzw. Beschleunigung sich auch auf "frisches" Wasser verteilt, so daß ein besonders gleichmäßiger Verlauf der Krafteinwirkung auf die Wassermoleküle über der Achse erreicht wird.

Eine weitere Gruppe von Ausführungsbeispielen zeichnet sich dadurch aus, daß das hydrodynamische Antriebselement von einer Unipolar-Maschine angetrieben wird, bei der ein von einem Strom durchflossener Leiter durch ein von der Magnetspule erzeugtes Magnetfeld bewegt wird, dessen Feldlinien stets im wesentlichen rechtwinkelig zur Richtung des Stromes verlaufen, wobei ferner vorzugsweise der Leiter einerseits mit einer in einer Welle des hydrodynamischen Antriebselementes verlaufenden ersten Zuleitung und andererseits mit einer entlang des Rohres verlaufenden zweiten Zuleitung elektrisch verbunden ist.

Diese Maßnahmen haben den Vorteil, daß durch die Verwendung einer Konfiguration, die ausschließlich nach Art einer Unipolar-Maschine ausgebildet ist, mit nur einem einzigen bewegten Teil, nämlich mit dem bewegten Leiter sowie dem damit integrierten Antriebselement, die erforderliche Vortriebskraft erzeugt wird. Es sind also weder Antriebselemente mit periodisch alternierend linear bewegten Maschinenelementen erforderlich, noch komplizierte Strukturen üblicher Gleichstromantriebe, wie sie beispielsweise in Unterseebooten eingesetzt werden. Die erfindungsgemäße Vorrichtung hat vielmehr eine extrem einfache Struktur und eignet sich damit besonders für einen Einsatz im maritimen Bereich.

Die Maßnahmen haben ferner den wesentlichen Vorteil, daß die Schraube und der elektrische Leiter einstückig miteinander kombiniert sind, so daß die elektrischen Leiter hydrodynamisch nicht in Erscheinung treten. Hierbei macht man sich also in vorteilhafter Weise die Tatsache zunutze, daß eine Schraube als hydrodynamisches Antriebselement zur Aufnahme von elektrischen Leitern geeignet ist, die radial oder axial verlaufen können.

Diese Maßnahme hat den Vorteil, daß eine besonders einfache Spulenkonfiguration verwendet wird, die als Baueinheit hydrodynamisch günstig ist, die einfach gewickelt werden kann und die auch in supraleitender Ausführung ohne Probleme handhabbar ist.

Die Schraube ist vorzugsweise mehrgängig und koaxial zur Solenoidspule angeordnet.

Auf diese Weise entsteht eine kompakte, hydrodynamische günstige und in ihren Antriebseigenschaften vorteilhafte bzw. mit bekannten Mitteln optimierbare Antriebseinheit, die sowohl in Überwasserschiffen wie auch in Unterseebooten in mannigfaltiger Einbauart Verwendung finden kann.

Bei einer Gruppe von Ausführungsbeispielen der Erfindung verläuft der Leiter im wesentlichen radial zu einer Achse der Schraube.

Bei dieser Gruppe von Ausführungsbeispielen macht man sich demzufolge in vorteilhafter Weise solche Arten von Magnetfeldern zunutze, die gleichförmig axial gerichtet sind und die mit unterschiedlichen Spulenanordnungen erzeugt werden können.

Besonders bevorzugt ist bei dem vorstehend erläuternden Ausführungsbeispiel, wenn das Rohr und die Schraube drehstarr miteinander verbunden sind und das Rohr über einen ersten Schleifkontakt mit einer raumfest angeordneten Spannungsquelle elektrisch verbunden ist.

Diese Maßnahmen haben den Vorteil, daß der Strom durch den elektrischen Leiter in einfacher Weise zu- bzw. abgeführt werden kann.

In entsprechender Weise kann auch eine Welle der Schraube und die Schraube drehstarr miteinander verbunden sein, wobei die Welle über einen zweiten Schleifkontakt mit einer raumfest angeordneten Spannungsquelle elektrisch verbunden ist.

Mit diesen Maßnahmen können unterschiedliche kinematische Variationen für Antriebsanordnungen und elektrische Verbindungen zwischen Welle, Schraube und Rohr, relativ zum raumfesten Bezugssystem, realisiert werden.

Bei einer weiteren Gruppe von Ausführungsbeispielen der Erfindung verläuft der Leiter im wesentlichen parallel zu einer Achse des hydrodynamischen Antriebselementes.

Diese Gruppe von Ausführungsbeispielen ist daher in vorteilhafter Weise bei solchen Magnetfeldern einsetzbar, bei denen die magnetischen Feldlinien gleichförmig in radialer Richtung zu einer gemeinsamen Achse verlaufen.

Bei dem vorstehend erläuterten Ausführungsbeispiel verläuft der Leiter vorzugsweise durch einen Bereich des Magnetfeldes außerhalb der Solenoidspule, in dem die magnetischen Feldlinien im wesentlichen radial zur Achse des hydrodynamischen Antriebselementes gerichtet sind.

Mit diesen Maßnahmen können daher auch bei der vorliegenden Gruppe von Ausführungsbeispielen die Vorteile von Solenoidspulen ausgenutzt werden, die bereits weiter oben im einzelnen erläutert wurden.

Besonders bevorzugt ist weiterhin, wenn zwei Solenoidspulen gleichachsig und axial voneinander beabstandet angeordnet sind, und der Leiter in axialer Richtung im Zwischenraum zwischen den Solenoidspulen verläuft.

Diese Maßnahme hat den Vorteil, daß das zwischen den Solenoidspulen in radialer Richtung austretende Magnetfeld zu einem doppelten Drehmoment führt und daß das Feld bei genügend naher axialer Beabstandung der beiden Solenoidspulen auch auf einen axial kurzen Raumbereich konzentriert werden kann und dort auch in genügender Homogenität radial verläuft.

Dabei kann in vorteilhafter Weise die Schraube drehstarr mit der Solenoidspule verbindbar und ein radial gerichtetes elektrisches Feld ist in dem von der Solenoidspule umschlossenen Raum erzeugbar sein.

Diese Maßnahmen haben den Vorteil, daß in bestimmten Betriebsfällen des Wasserfahrzeuges auf einen MHD-Antrieb umgeschaltet werden kann, der frei von mechanischer Geräuschentwicklung ist. Hierzu wird die Schraube arretiert und mittels des radial gerichteten elektrischen Feldes in Zusammenwirkung mit dem axial gerichteten magnetischen Feld dem Umgebungswasser im Bereich der Schraube eine zirkulare Bewegung um die Achse der Schraube herum aufgeprägt. Da die Schraube eine Leitfläche aufweist, die zur Achse angestellt ist, wird das zirkular umlaufende Umgebungswasser in axialer Richtung umgelenkt und erzeugt auf diese Weise einen Rückstoß.

Mit den vorstehend erläuterten Maßnahmen ist es somit möglich, ein Wasserfahrzeug mit einem Antrieb zu versehen, der im nichtsensiblen Einsatzfall nach Art einer Unipolarmaschine arbeitet, d.h. mit einer gewissen, wenngleich geringen Geräuschentwicklung, während im sensiblen Einsatz, beispielsweise bei einer Schleichfahrt eines Unterseebootes, auf den MHD-Antrieb umgeschaltet wird.

Wie auch beim Stand der Technik ist es bei der Erfindung besonders bevorzugt, wenn eine supraleitende Spule als Magnetspule eingesetzt wird, weil die Vortriebskraft sowohl beim Unipolar-Antrieb mit sich drehendem Antriebselement wie auch beim MHD-Antrieb die Vortriebskraft direkt von der magnetischen Feldstärke abhängt.

Bei einer bevorzugten Ausgestaltung der erfindungsgemäßen Vorrichtung sind die Leitelemente als Schnecke, insbesondere in Gestalt einer archimedischen Spirale, ausgebildet.

Diese Maßnahme hat den Vorteil, daß das um die zentrale Elektrode umlaufende Umgebungswasser in besonders effektiver Weise in eine axiale Richtung umgelenkt wird, so daß eine maximale Vorschubkraft erzeugt wird.

Bei bevorzugten Ausführungsbeispielen der Erfindung ist der Anstellwinkel der Leitelemente einstellbar. Dies kann alternativ oder zugleich dadurch geschehen, daß der Anstellwinkel in radialer Richtung oder in axialer Richtung eingestellt wird.

Auf diese Weise läßt sich erreichen, daß die Umsetzung der umlaufenden Wasserbewegung in einen axialen Schub im Hinblick auf den Schub selbst und/oder das Strömungsverhalten optimiert wird. Wenn die Leitelemente am Eintritts- und/oder am Austrittsende des Rohres entsprechend ausgelegt werden, so ist es in weiterhin vorteilhafter Weise möglich, die axiale Strömungsrichtung am Rohreintritt wirbelarm in eine umlaufende Strömungsrichtung im Rohr umzusetzen und am Austrittsende des Rohres wieder eine weitgehend laminare, axiale Strömung zu erzeugen. Diese Minimierung von Turbulenzen am Eintritt und am Austritt des Rohres hat den Vorteil, daß zum einen der Wirkungsgrad der Anordnung erhöht wird, außerdem wird aber auch die Detektierbarkeit des Wasserfahrzeuges, insbesondere wenn es sich um ein Unterwasserfahrzeug handelt, vermindert.

Bei einer weiteren bevorzugten Ausgestaltung der erfindungsgemäßen Vorrichtung ist die Spannungsquelle in ihrer Ausgangsspannung und Polarität einstellbar.

Diese Maßnahme hat den Vorteil, daß die Vorschubkraft und - richtung beliebig einstellbar sind, so daß das Wasserfahrzeug in äußerst einfacher Weise in seiner Fahrtgeschwindigkeit und -richtung eingestellt werden kann.

Wie auch beim Stand der Technik ist es bei der Erfindung besonders bevorzugt, wenn eine supraleitende Spule als Magnetspule eingesetzt wird, weil infolge der natürlichen Ionenkonzentration im Salzwasser hohe Feldstärken erforderlich sind, um die zum Antrieb eines realen Wasserfahrzeuges erforderlichen Vorschubkräfte zu erzeugen.

Hierbei ist besonders bevorzugt, wenn die Spule aus einem Hochtemperatur-Supraleiter besteht.

Diese Maßnahme hat den Vorteil, daß je nach Sprungtemperatur des Supraleiters nur verhältnismäßig einfache Kühleinrichtungen oder sogar überhaupt keine Kühleinrichtungen erforderlich sind, wenn ein supraleitendes Material zum Wickeln der Spule eingesetzt wird, das bereits bei der Umgebungstemperatur des Wasserfahrzeuges im supraleitenden Zustand ist.

Nach der Erfindung sind zahlreiche Varianten denkbar, um erfindungsgemäße Vorrichtungen in oder an einem Rumpf eines Überwasser- oder Unterwasserfahrzeuges anzuordnen.

So ist bei einer ersten Variante vorgesehen, die Antriebseinheit in einen Schiffsrumpf zu integrieren, während alternativ auch möglich ist, die Antriebseinheit an einem Ausleger im Abstand von einem Schiffsrumpf anzuordnen oder diese in einem Kiel eines Schiffsrumpfes zu integrieren, je nachdem, wie dies im Einzelfall, auch unter Berücksichtigung des geplanten Einsatzes des Wasserfahrzeuges, sinnvoll ist.

Wenn die Antriebseinheit nach einer weiteren Ausbildung der Erfindung zur Fahrtrichtung eines Schiffsrumpfes geneigt, vorzugsweise schwenkbar, angeordnet ist, kann bei einem Unterwasserfahrzeug ein Manöver zur Erhöhung oder Verminderung der Tauchtiefe gefahren werden, während bei einem Überwasserfahrzeug durch Anheben (Levitation) des Schiffsrumpfes der hydrodynamische Widerstand vermindert werden kann, wie man dies auch von Tragflügelbooten her kennt.

Besonders bevorzugt ist nach der Erfindung, wenn mehrere aus Solenoidspule und Rohr gebildete Antriebseinheiten auf einem gemeinsamen Gestell angeordnet sind, derart, daß das gesamte magnetische Dipolmoment im wesentlichen Null ist.

Besonders bevorzugt ist in diesem Fall, wenn zwei aus Solenoidspule und Rohr gebildete Antriebseinheiten parallel nebeneinander auf einem gemeinsamen Gestell angeordnet sind und die von den Solenoidspulen erzeugten Magnetfelder entgegengesetzt gerichtet sind. Es müssen dann entweder die Leitelemente gleichsinnig geneigt und die elektrischen Felder entgegengesetzt gerichtet oder aber die Leitelemente gegensinnig geneigt und die elektrischen Felder gleichgerichtet sein.

In beiden Fällen erreicht man, daß die Vorschubkraft der beiden Antriebseinheiten gleichsinnig gerichtet ist, während andererseits die parallele Anordnung der Antriebseinheiten den Vorteil hat, daß sich die auch bei Solenoidspulen auftretenden Streufelder gegenseitig schließen und daher weiter vermindert werden. Während hierbei die Variante mit gleichsinnig geneigten Leitelementen den Vorteil hat, daß mechanisch identische Antriebseinheiten verwendet werden können, hat die Variante mit den gegensinnig geneigten Leitelementen den Vorteil, daß der Gesamtantrieb in noch höherem Maße frei von Rollmomenten ist, die auf den Schiffsrumpf ausgeübt werden.

Es versteht sich dabei jedoch, daß die beiden einzelnen Antriebseinheiten bei einer solchen Tandem-Anordnung auch in unterschiedlicher Weise eingestellt werden können, beispielsweise dadurch, daß man die Spannungsamplitude und/oder Polarität unterschiedlich einstellt. Auf diese Weise ist dann ein Manövrieren möglich, wenn sich die Antriebskräfte der beiden einzelnen Antriebseinheiten nach Betrag und/oder Richtung unterscheiden.

Schließlich sind noch Ausführungsbeispiele der Erfindung besonders bevorzugt, bei denen die Magnetspule von einem Abschirmmantel umgeben ist.

Diese Maßnahme hat den Vorteil, daß zum einen die an Bord des Unterwasserfahrzeuges befindlichen, magnetfeldempfindlichen Gerätschaften weitgehend geschützt werden, außerdem ergibt sich der Vorteil, daß das Wasserfahrzeug mit magnetischen Methoden schlecht detektierbar ist, und schließlich wird auch der Wirkungsgrad der Magnetspule erhöht.

Weitere Vorteile ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine perspektivische Darstellung einer magnetohydrodynamischen Antriebseinheit für Wasserfahrzeuge nach dem Stande der Technik;
- Fig. 2: eine schematisierte Darstellung zur Erläuterung der bei der Anordnung gemäß Fig. 1 wirkenden Lorentz-Kräfte;
- Fig. 3: eine Schnittdarstellung eines Ausführungsbeispiels einer erfindungsgemäßen Antriebseinheit;
- Fig. 4: eine Darstellung, ähnlich Fig. 3, jedoch für eine erfindungsgemäße Tandem-Antriebseinheit;
- Fig. 5 bis 8: schematisierte Darstellungen zur Erläuterung von Möglichkeiten der Anbringung erfindungsgemäßer Antriebseinheiten an bzw. in Schiffsrümpfen;
- Fig. 9: eine weitere schematisierte Darstellung zur Erläuterung möglicher Zusatzeinrichtungen für erfindungsgemäße Antriebseinheiten;
- Fig. 10: eine ebenfalls schematisierte Ansicht einer Variante einer erfindungsgemäßen Antriebseinheit mit einer Beeinflussung des wirksamen elektrischen Feldes in Abhängigkeit vom radialen Abstand;
- Fig. 11: eine Darstellung, ähnlich Fig. 3, jedoch noch weiter vereinfacht, für ein weiteres Ausführungsbeispiel einer erfindungsgemäßen Vorrichtung;
- Fig. 12: eine schematisierte Ansicht eines in einem Magnetfeld befindlichen, stromdurchflossenen Leiters, zur Erläuterung eines Unipolar-Antriebes;
- Fig. 13: eine schematisierte Seitenansicht eines Unipolar-Antriebes;
- Fig. 14: in vergrößertem Maßstab einen Ausschnitt aus einer erfindungsgemäßen Unipolar- und MHD-Antriebseinheit.

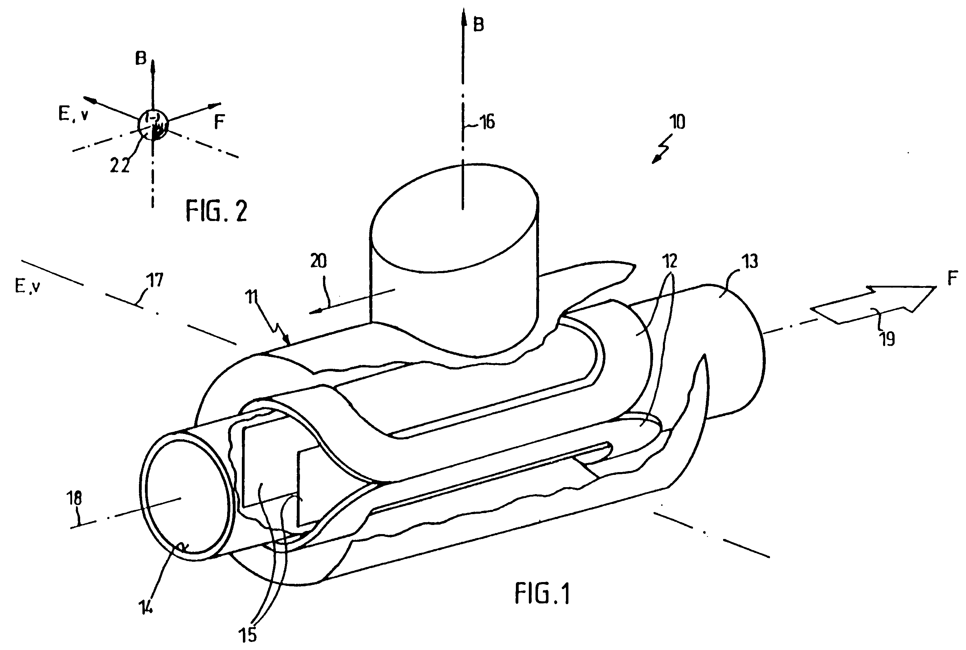

In Fig. 1 bezeichnet 10 insgesamt eine magnetohydrodynamische Antriebseinheit für ein Wasserfahrzeug nach dem Stande der Technik.

Die Antriebseinheit 10 umfaßt einen Kryostaten, in dem ein Paar supraleitender Sattelspulen 12 angeordnet ist. Die Sattelspulen 12 sind beidseits eines Rohres 13 angeordnet, dessen Durchgangsöffnung 14 sich auf Raumtemperatur befindet und von Umgebungswasser, nämlich Meeres-Salzwasser, durchströmt wird.

In der Durchgangsöffnung 14 befinden sich zwei Plattenelektroden 15, die sich in axialer Richtung des Rohres 13 erstrecken und einen bestimmten Abstand voneinander aufweisen. Die Plattenelektroden 15 sind an eine in Fig. 1 nicht dargestellte Spannungsquelle angeschlossen.

Wenn die Sattelspulen 12 erregt sind, erzeugen sie ein Magnetfeld B, dessen Richtung in Fig. 1 mit einer Achse 16 bezeichnet ist. Die Elektroden 15 erzeugen demgegenüber ein elektrisches Feld E, dessen Achse in Fig. 1 mit 17 bezeichnet ist und auf der Achse 16 des magnetischen Feldes B senkrecht steht. Beide Achsen 16, 17 stehen ihrerseits senkrecht auf einer Achse 18 des Rohres 13.

Betrachtet man nun Fig. 2, so erkennt man den in Fig. 1 wirksamen Mechanismus wie folgt:

Das Umgebungswasser, nämlich das Meeres-Salzwasser, enthält Ladungsträger 22, nämlich die Ionen des Salzwassers. Die Ladungsträger 22 sind im Wasser auch beweglich, so daß bei Einwirkung eines elektrischen Feldes E die Ladungsträger 22 in Bewegung geraten, weil das elektrische Feld E auf die Ladungsträger 22 eine in Richtung des elektrischen Feldes E gerichtete Kraft ausübt. Die Ladungsträger 22 nehmen damit eine Geschwindigkeit v ein, deren Vektor in Richtung der elektrischen Feldstärke E gerichtet ist.

Da anderseits auf die Ladungsträger 22 ein Magnetfeld B wirkt, das senkrecht zum elektrischen Feld E gerichtet ist, wird auf die Ladungsträger 22 ferner die sogenannte Lorentz-Kraft F ausgeübt, die dem Kreuzprodukt der Vektoren der Geschwindigkeit v und des magnetischen Feldes B entspricht und damit wiederum senkrecht zu den beiden vorstehend genannten Größen gerichtet ist. Dies bedeutet, daß die Lorentz-Kraft F in Richtung der Achse 18 des Rohres 13 liegt. Infolge der Vielzahl von Ladungsträgern 22 im Salzwasser ergibt sich damit ein Rückstoß auf die Antriebseinheit 10, wie mit einem Pfeil 19 in Fig. 1 angedeutet. Da die Antriebseinheit 10 ihrerseits frei beweglich ist, nimmt sie Fahrt auf, und zwar in einer mit einem Pfeil 20 in Fig. 1 bezeichneten Fahrtrichtung, die entgegengesetzt zum Rückstoß 19 in der Achse 18 des Rohres 13 liegt.

Bei der bekannten Einrichtung der Fig. 1 ist es erforderlich ein Paar der Sattelspulen 12 beidseitig auf dem Rohr 13 anzubringen, wozu eine verhältnismäßig komplizierte Formgebung der Spulen 12 und eine ebenso aufwendige Halterung dieser Spulen 12 am Rohr 13 erforderlich ist. Außerdem wird aus der Darstellung der Fig. 1 offensichtlich, daß die Anordnung der Spulen 12 ein sehr großes Streufeld zur Folge hat, weil die Spulen 12 ein sehr großes Fenster freilassen und sich die Feldlinien daher in hohem Maße weit außerhalb der Antriebseinheit 10 schließen. Schließlich bedarf die Antriebseinheit 10 eines verhältnismäßig großen Kryostaten 11, um darin die Sattelspulen 12 mit dem umgebenen Rohr 13 unterzubringen.

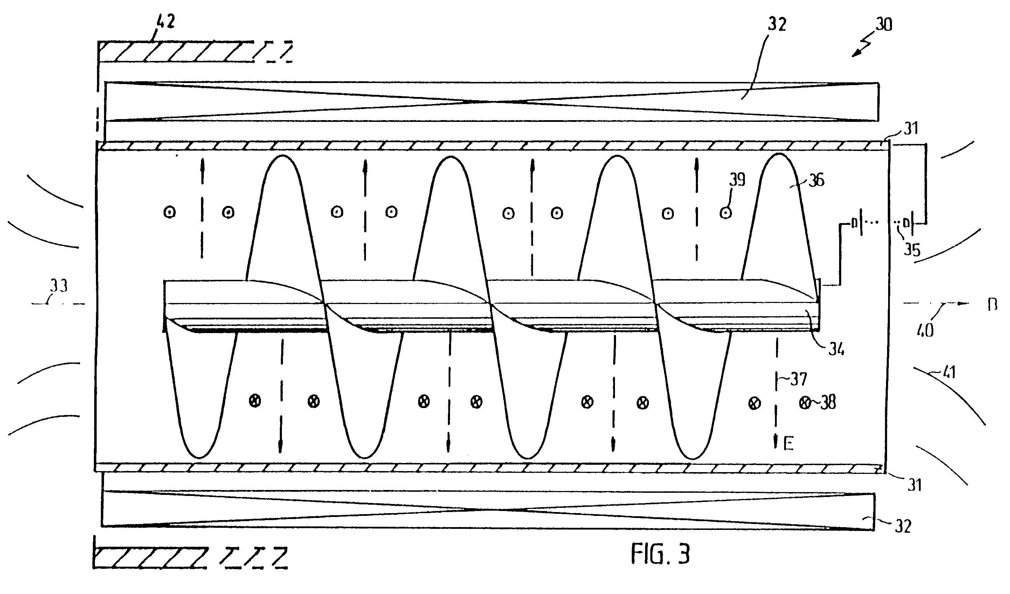

Fig. 3 zeigt demgegenüber in einer Schnittdarstellung eine Antriebseinheit 30 nach der Erfindung. Bei der Antriebseinheit 30 ist wiederum ein Rohr 31 vorgesehen, das üblicherweise in Fahrtrichtung des Wasserfahrzeuges ausgerichtet ist. Im Gegensatz zur bekannten Anordnung der Fig. 1 wird das Rohr 31 bei der erfindungsgemäßen Antriebseinheit 30 von einer Solenoidspule 32, vorzugsweise ebenfalls einer supraleitenden Solenoidspule, umgeben. Die Solenoidspule 32 umschließt das Rohr 31 praktisch über dessen gesamte Länge.

In einer Achse 33 des Rohres 31 ist eine Elektrode 34 zentrisch angeordnet. Zwischen die Elektrode 34 und das elektrisch leitfähige Rohr 31 ist eine Spannungsquelle 35 geschaltet. Der Zwischenraum zwischen der Elektrode 34 und dem Rohr 31 ist beim Ausführungsbeispiel der Fig. 3 von einer Schnecke 36 ausgefüllt, die vorzugsweise die Gestalt einer archimedischen Spirale aufweist und zunächst als mit dem Rohr 31 starr verbunden angenommen werden soll.

Wenn die Spannungsquelle 35, deren Ausgangsspannung und Polarität einstellbar sein können, eingeschaltet wird, so bildet sich zwischen der Elektrode 34 und dem Rohr 31 ein elektrisches Feld wie bei einem Zylinderkondensator aus, wie mit den radialen elektrischen Feldlinien 37 in Fig. 3 angedeutet. Beim Betriebsfall der Fig. 3 seien die elektrischen Feldlinien 37 von innen nach außen, d.h. von der Elektrode 34 zum Rohr 31 hin gerichtet. Da andererseits das magnetische Feld B axial gerichtet ist, wie mit magnetischen Feldlinien 41 angedeutet, erhalten die freien Ladungsträger des Umgebungswassers, d.h. des Meeres-Salzwassers, eine Lorentz-Kraft, d.h. eine Strömungsrichtung aufgeprägt, die kreisförmig um die Elektrode 34 herum verläuft. Dies ist in Fig. 3 mit Strömungsrichtungen 38 in die Zeichenebene hinein und 39 aus der Zeichenebene heraus angedeutet.

Diese zirkulare Strömungsrichtung 38, 39 der freien Ladungsträger des Umgebungswassers wird über die starre Schnecke 36 in eine axiale Rückstoßkraft 40 umgesetzt, wie in Fig. 3 mit einem Pfeil angedeutet. Die Antriebseinheit 30 in Fig. 3 wird daher beim dargestellten Betriebsfall nach links bewegt werden, weil die bewegten Ladungsträger auf die geneigten Anströmflächen der Schnecke 36 auftreffen und damit die zirkular gerichtete Lorentz-Kraft in die axial gerichtete Rückstoßkraft 40 umgesetzt wird.

Aus Fig. 3 erkennt man deutlich, daß die verwendete Solenoidspule 32 einen erheblich einfacheren Aufbau als die Sattelspulen 12 beim Stand der Technik gemäß Fig. 1 hat, so daß wesentlich kompaktere Einheiten aufgebaut werden können, bei denen mit gleichem Energieeinsatz höhere Feldstärken im Inneren des Rohres 31 erzielt werden können. Zudem ist die Feldüberhöhung am Ort der Leiter der Spule bei der Solenoidspule 32 wesentlich geringer als bei der Sattelspule 12 der Fig. 1, so daß bei Verwendung supraleitender Spulen die kritischen Feldstärkewerte erst bei wesentlich höheren Stromwerten erreicht werden.

Die Solenoidspule 32 kann von einem zylindrischen Eisenabschirmmantel 42 umgeben sein. Durch den Mantel 42 werden magnetfeldempfindliche Vorrichtungen an Bord des Wasserfahrzeuges geschützt; außerdem ist das Wasserfahrzeug mit magnetischen Methoden nicht mehr so leicht zu orten. Dies gilt insbesondere auch im Vergleich zu den Sattelspulen 12 des Standes der Technik gemäß Fig. 1, die mit Eisenmänteln nicht oder nur unter großem Aufwand abschirmbar sind.

Auch das nach außen dringende Streufeld ist bei der Anordnung gemäß Fig. 3 wesentlich kleiner, insbesondere dann, wenn eine Tandem-Anordnung gemäß Fig. 4 verwendet wird.

Bei dieser Anordnung wird eine Antriebseinheit 50 verwendet, die auf einem gemeinsamen Gestell 51 zwei Antriebseinheiten 30a, 30b nach Art der Antriebseinheit 30 gemäß Fig. 3 enthält.

Die Solenoidspulen 32a, 32b der Antriebseinheiten 30a, 30b sind dabei so geschaltet, daß die Magnetfelder 52, 53 axial entgegengesetzt gerichtet sind. Dies hat zur Folge, daß die magnetischen Feldlinien 41 sich im Außenberich der Solenoidspulen 32a, 32b auf engem Raum schließen, wie in Fig. 4 deutlich zu erkennen ist. Das in den Fernbereich dringende Streufeld ist bei der Anordnung gemäß Fig. 4 daher minimal.

Da die Magnetfelder 52, 53 der Antriebseinheiten 30a, 30b entgegengesetzt gerichtet sind, müssen Maßnahmen getroffen werden, um für den Regelfall der gemeinsamen Geradeausfahrt eine Gleichrichtung der Rückstoßkräfte zu erreichen.

Dies kann alternativ dadurch geschehen, daß entweder die Richtung des elektrischen Feldes umgeschaltet und der Anstellwinkel der Leitelemente, d.h. der Schnecke 36a, 36b beibehalten wird, wie dies in Fig. 4 dargestellt ist. Wie man aus Fig. 4 nämlich erkennt, entspricht die untere Antriebseinheit 30b vollkommen derjenigen gemäß Fig. 3, während bei der oberen Antriebseinheit 30a die Richtung des elektrischen Feldes umgeschaltet wurde, wie man aus der Spannungsquelle 35a und den elektrischen Feldlinien 37a im Gegensatz zu den Elementen 35b, 37b erkennt.

Dies ermöglicht es, die mechanischen Elemente, insbesondere die Schnecke 36a bzw. 36b identisch zu halten, was eine wirtschaftlichere Fertigung ermöglicht.

Bei einer in den Figuren nicht dargestellten Variante ist es hingegen auch möglich, die Richtung des elektrischen Feldes beizubehalten und dafür Schnecken mit entgegengesetzter Anstellung einzusetzen. Dies hat wiederum den Vorteil, daß die auf die jeweiligen Antriebseinheiten 30a, 30b wirkenden Rollmomente entgegengesetzt wären, so daß das Gestell 51 insoweit kompensiert wäre.

Insgesamt ergibt sich bei der Anordnung gemäß Fig. 4 damit eine Fahrtrichtung nach links, wie mit einem Pfeil 55 angedeutet.

Es versteht sich dabei, daß die Spannungsquellen 35a, 35b, die, wie bereits erwähnt, im Hinblick auf ihre Ausgangsspannung und ihre Polarität einstellbar sind, auch unterschiedlich eingestellt werden können. Auf diese Weise kann die Antriebseinheit 50 gemäß Fig. 4 auch von einer Geradeausfahrt abweichen und manövrieren, wenn man die Spannungsquellen 35a, 35b in ihrer Amplitude und/oder Polarität unterschiedlich einstellt.

Ferner ist in Fig. 4 am linken Ende (Bugseite) der Anordnung noch ein Elektrodenpaar 56 dargestellt, das im Abstand zueinander und parallel zur Zeichenebene angeordnet ist. Das Elektrodenpaar 56 beaufschlagt das Streufeld 41 und erzeugt bei entsprechend anliegender Spannung ebenfalls eine Vorschubkraft in Fahrtrichtung, weil die vom Elektrodenpaar 56 erzeugten elektrischen Feldlinien senkrecht zur Zeichenebene und damit senkrecht zu den magnetischen Feldlinien 41 des Streufeldes liegen, die wiederum senkrecht zur Fahrtrichtung verlaufen.

Es versteht sich ferner, daß die Anzahl von zwei Antriebseinheiten 30a, 30b in Fig. 4 nur beispielhaft zu verstehen ist. Es können darüber hinaus auch noch mehr Antriebseinheiten 30 verwendet werden, wobei vorzugsweise das Gesamt-Dipolmoment dieser Einheiten gleich Null ist.

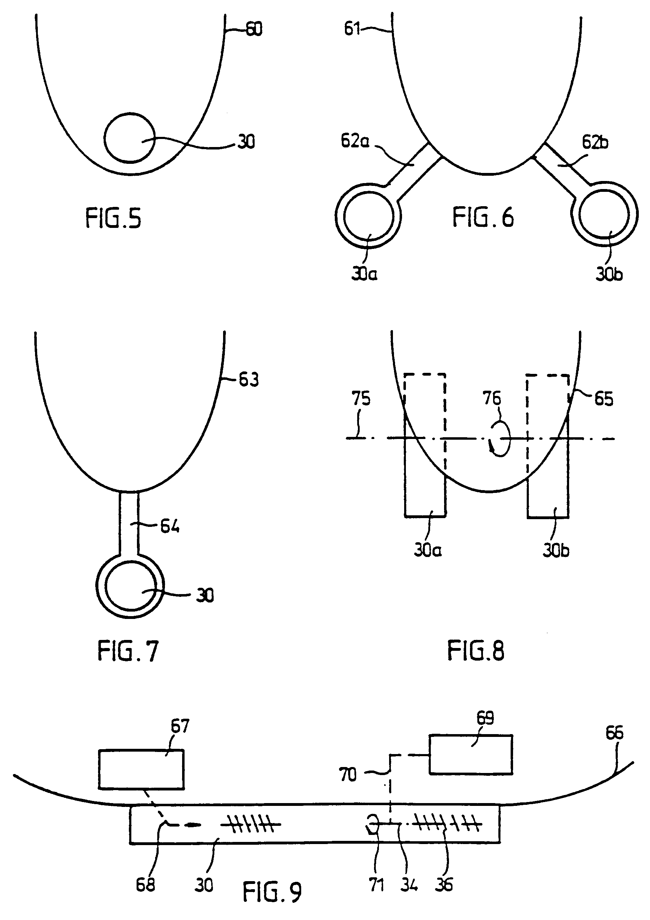

In den Fig. 5 bis 8 sind verschiedene Varianten dargestellt, wie einzelne Antriebseinheiten oder Tandem-Antriebseinheiten in Schiffsrümpfen von Über- oder Unterwasserfahrzeugen untergebracht werden können.

Bei der Variante gemäß Fig. 5 ist eine einzelne Antriebseinheit 30 der in Fig. 3 erläuterten Art in einen Schiffsrumpf 60 integriert, so daß ein minimaler Strömungswiderstand entsteht.

Bei der Variante gemäß Fig. 6 ist eine Tandem-Antriebseinheit 30a, 30b an Auslegern 62a, 62b im Abstand von einem Schiffsrumpf 61 angeordnet.

Bei der Variante gemaß Fig. 7 befindet sich wiederum eine einzelne Antriebseinheit 30 gemäß Fig. 3 am unteren Ende eines Kieles 64 eines Schiffsrumpfes 63.

Schließlich veranschaulicht Fig. 8 noch die Möglichkeit, eine Tandem-Antriebseinheit 30a, 30b in einem Schiffsrumpf 65 derart anzuordnen, daß die Richtung der Antriebseinheiten 30a, 30b nicht parallel zur Fahrtrichtung verläuft, sondern um eine zur Fahrtrichtung senkrechte Achse 75 geschwenkt werden kann, wie mit einem Pfeil 76 angedeutet. Bei Unterwasserfahrzeugen kann damit in Tiefenrichtung manövriert werden, während bei Überwasserfahrzeugen eine Levitation des Schiffsrumpfes erreicht werden kann mit dem Ziel, den hydrodynamischen Widerstand nach Art von Tragflügelbooten zu verringern.

Es versteht sich dabei, daß die Anordnungen der Fig. 5 bis 8 auch in Kombination miteinander oder in Vertauschung der einzelnen Elemente eingesetzt werden können, beispielsweise beim Fall der Fig. 7, indem am unteren Ende des Kiels 64 nicht eine einzelne Antriebseinheit 30, sondern vielmehr eine Tandem-Einheit 30a, 30b nach Art der Fig. 4 eingesetzt wird.

Fig. 9 zeigt einen weiteren Schiffsrumpf 66, an dessen Unterseite eine Antriebseinheit 30 nach Art der Fig. 3 angeordnet ist, wobei sich auch hier versteht, daß es sich um eine Tandem-Einheit handeln kann.

Am vorderen Ende der Antriebseinheit 30 befindet sich im Schiffsrumpf 66 eine Ionisiereinheit 67, die über eine Leitung 68 mit dem Innenraum des Rohres der Antriebseinheit 30 verbunden ist.

Die Ionisiereinheit 67 kann beispielsweise ein Vorratsbehälter und Dosierer für eine Substanz sein, mit der sich die Leitfähigkeit von Meerwasser erhöhen läßt, beispielsweise ein Salz- oder ein Salzlösungs-Tank.

Über die Leitung 68 kann von der Ionisiereinheit 67 im Kurzzeit- oder Dauerbetrieb die elektrische Leitfähigkeit, d.h. die Ionenkonzentration, im Umgebungswasser erhöht werden, das das Rohr der Antriebseinheit 30 durchströmt. Infolge der Erhöhung der Ionenkonzentration erhöht sich dann auch die Rückstoßkraft und damit die Fahrtgeschwindigkeit des Schiffsrumpfes 66.

In der rechten Hälfte von Fig. 9 ist ein Antriebsmotor 69, beispielsweise ein Elektromotor, ein Dieselmotor, insbesondere Kreislaufdieselmotor o. dgl., zu erkennen. Der Antriebsmotor 69 steht über einer Antriebsverbindung 70 mit der Elektrode 34 in Verbindung, die in diesem Falle drehstarr mit der Schnecke 36 verbunden und drehbar im Rohr der Antriebseinheit 30 gelagert ist. Auf diese Weise ist es möglich, die Elektrode 34 mit der Schnecke 36 in Drehung zu versetzen, wie mit einem Pfeil 71 angedeutet.

Wirkt die Drehung der Schnecke 36 der auf sie wirkenden Lorentz-Kraft der Ladungsträger des Umgebungswassers entgegen, so erhöht dies den Rückstoß und damit die Fahrgeschwindigkeit des Schiffsrumpfes 66, sei es im Kurzzeitbetrieb, sei es im Dauerbetrieb.

Es ist bekannt, daß bei einem Zylinderkondensator die elektrische Feldstärke von der in der Zylinderachse befindlichen Elektrode radial nach außen hin mit dem Kehrwert des Radius abnimmt. Dies hat zur Folge, daß auch die auf die Ladungsträger des Umgebungswassers ausgeübten Lorentz-Kräfte abnehmen, weil zugleich mit der elektrischen Feldstärke auch die Geschwindigkeit der Ladungsträger abnimmt, und zwar mit dem Kehrwert des Quadrates des Radius.

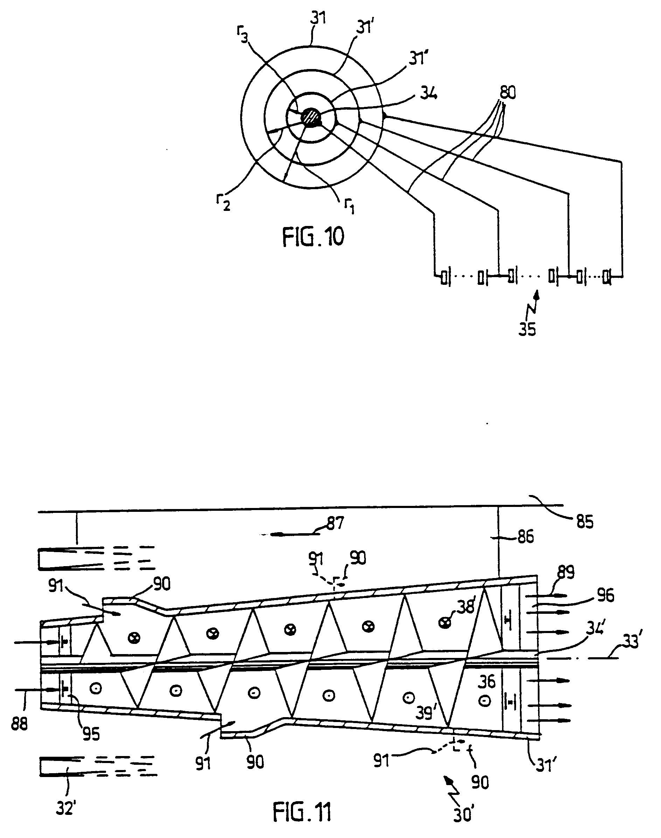

Da dies im Einzelfall zu Turbulenzen oder Kavitationen führen kann, ist beim Ausführungsbeispiel der Fig. 10 vorgesehen, diese radiale Abhängigkeit zu kompensieren bzw. zu optimieren.

Beim Ausführungsbeispiel der Fig. 10 wird dies dadurch erreicht, daß die radiale Strecke zwischen der Elektrode 34 und dem Rohr 31 in mehrere zylindrische Abschnitte unterteilt wird. Hierzu sind zwei konzentrische Rohr 31', 31'' vorgesehen, die sich im radialen Abstand r₂ bzw. r₃ von der Elektrode 34 befinden, wobei r₂ und r₃ kleiner sind als der radiale Abstand r₁ des Rohres 31 von der Elektrode 34.

Legt man die Rohre 31, 31' und 31'' nun an Abgriffe der Spannungsquelle 35, so ergibt sich ein linearisierter Verlauf der elektrischen Spannung über dem Radius r, wobei dieser Verlauf umso linearer gemacht werden kann, je feiner die Abstufung zwischen den verwendeten Rohren 31, 31', 31'' ... ist. Auch ist es möglich, die Verbindungsleitungen 80 von den Rohren 31, 31', 31'' zur Spannungsquelle 35 in nicht-linearer Weise so an die Spannungsquelle 35 anzuschließen, daß der Verlauf noch weiter optimiert wird, z.B. um eine vom Radius unabhängige, konstante Winkelbeschleunigung zu erzielen.

Alternativ oder zusätzlich ist es selbstverständlich auch möglich, den Anstellwinkel der Schnecke 36 über dem Radius und/oder entlang der Achse so zu variieren, daß dem Feldstärkeabfall nach außen hin zum Zwecke einer Optimierung im Hinblick auf den Schub und/oder das Strömungsverhalten Rechnung getragen wird.

Fig. 11 zeigt eine weitere Variante einer Antriebseinheit 30', die weitgehend derjenigen in Fig. 3 ähnelt; und es sind auch entsprechende Elemente mit den gleichen Bezugszeichen, unter Hinzufügung eines Apostroph, versehen.

Die Antriebseinheit 30' der Fig. 11 befindet sich beispielsweise unterhalb eines Schiffsrumpfes 45 an einem Ausleger 86 oder Kiel, sie kann aber auch in anderer Weise am Schiffsrumpf angebracht sein, wie dies weiter oben anhand mehrerer Beispiele bereits erläutert wurde.

Nimmt man in Fig. 11 als Fahrtrichtung den Pfeil 87 an, so bezeichnet 88 am in Fig. 11 linken Ende des Rohres 31' das einströmende Wasser, während 89 am rechten Ende des Rohres 31' das ausströmende Wasser bezeichnet.

Wie man aus Fig. 11 deutlich erkennen kann, nimmt das Rohr 31' vom Wassereintritt zum Wasseraustritt hin an Querschnitt zu, ist also beispielsweise in Gestalt eines Kegels, eines Rotationsparaboloides oder eines Rotationshyperboloides ausgebildet.

Außerdem können seitlich im Rohr 31' Ansaugöffnungen 90 vorgesehen sein, durch die nach Art einer Wasserstrahlpumpe zusätzliches Wasser in das Rohr 31' eingesaugt werden kann, wie mit Pfeilen 91 angedeutet.

Die Querschnittsvergrößerung im Rohr 31' bzw. das seitliche Ansaugen von zusätzlichem Wasser hat folgenden Sinn:

Wird, wie in Fig. 3 dargestellt, ein durchgehendes Rohr mit konstantem Querschnitt verwendet, so wird das durchströmende Wasser über die axiale Länge beständig der Lorentz-Kraft ausgesetzt, so daß bei einem kompressiblen Medium das austretende Medium gegenüber dem eintretenden Medium beschleunigt wäre. Da es sich bei Wasser bekanntlich um ein inkompressibles Medium handelt, erhöht sich durch den axialen Wirkungsbereich der Lorentz-Kräfte der Sog, und es kann demzufolge zu Wirbeln und Kavitationserscheinungen kommen. Dem wird nach dem Ausführungsbeispiel der Fig. 11 dadurch begegnet, daß seitlich "frisches" Wasser angesaugt und gleichzeitig ein zunehmender Querschnitt zur Verfügung gestellt wird, so daß, mit anderen Worten, ein kompressibles Medium simuliert wird. Auf diese Weise kann insgesamt die Ausströmgeschwindigkeit des Wassers 89 ebenso groß bemessen sein wie die Eintrittsgeschwindigkeit des Wassers bei 88, wobei jedoch infolge des größeren Querschnittes des Rohres 31' am Austrittsende und infolge der seitlichen Ansaugöffnungen 90 die austretende Wassermenge pro Zeit großer ist.

Schließlich ist in Fig. 11 mit 95 und 96 noch veranschaulicht, daß am Rohreintritt und am Rohraustritt Umlenk-Leitbleche vorgesehen sein können, um eine laminare, axiale Einströmung bzw. Ausströmung des Wassers zu erzielen und zu verhindern, daß die zirkulare Strömung im Rohr 31' sich bis in den Außenbereich des Rohres 31' fortsetzt.

Bei einem praktischen Ausführungsbeispiel der erfindungsgemäßen Antriebseinheit kann die Antriebseinheit 30 gemäß Fig. 3 beispielsweise so ausgelegt werden, daß das Rohr 31 einen Durchmesser von einem Meter und eine Länge von 10 Metern erhält. Die Elektrode 34 kann einen Durchmesser von 0,2 Metern haben, und zwischen Elektrode 34 und Rohr 31 kann eine archimedische Schnecke 36 eingesetzt werden.

Als Solenoidspule 32 kann eine Spule von beispielsweise 3 bis 4 T Magnetfeldstärke eingesetzt werden, wie man sie beispielsweise von der Kernspintomographie her kennt. Derartige Solenoidspulen haben den weiteren Vorteil, daß die Felderhöhung am Orte der Windungen der Spule selbst so gering wie möglich gehalten werden kann (anders als bei Sattelspulen der in Fig. 1 gezeigten Art), so daß mit kleineren Magnetspulen höhere Feldstärken erzielt werden können.

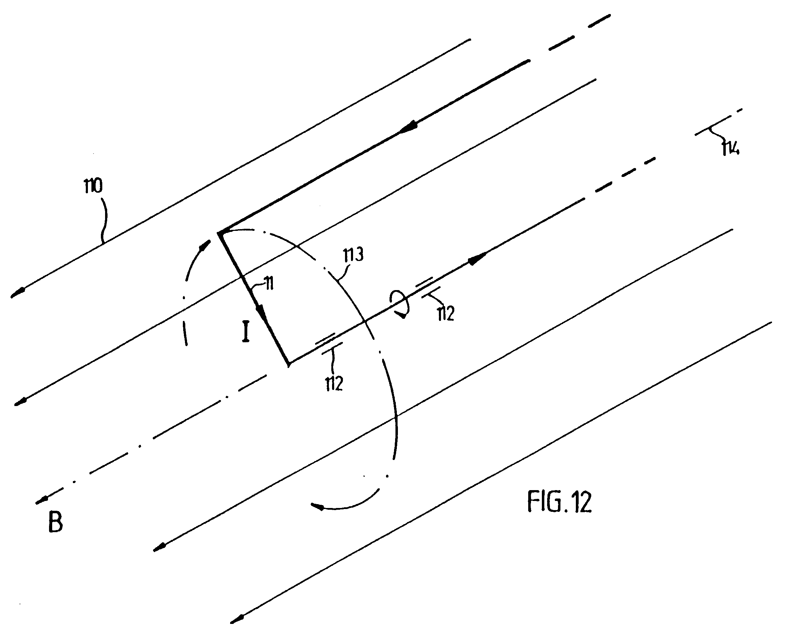

In Fig. 12 sind mit 110 Feldlinien eines magnetischen Feldes B bezeichnet. Die magnetischen Feldlinien 110 verlaufen zueinander parallel in einer vorgegebenen Richtung.

Ein elektrischer Leiter 111 ist senkrecht zu den magnetischen Feldlinien 110 angeordnet und wird von einem Gleichstrom I durchflossen. Der elektrische Leiter 111 ist in einer Richtung senkrecht zu seiner Erstreckung in mit 112 angedeuteten Lagern drehbar gehalten.

Da der Leiter 111, wie erwähnt, senkrecht zu den magnetischen Feldlinien 110 gerichtet und stromdurchflossen ist, wird er infolge der sich einstellenden Lorentz-Kraft senkrecht zu seiner Erstreckung und senkrecht zu den magnetischen Feldlinien 110 ausgelenkt, so daß er eine Drehbewegung um eine durch die Lager 112 definierte Achse 114 ausführt, die parallel zu den magnetischen Feldlinien 110 gerichtet ist.

Über die Drehbewegung des elektrischen Leiters 111 um die Achse 114 kann ein Drehmoment abgenommen und zu Antriebszwecken verwendet werden.

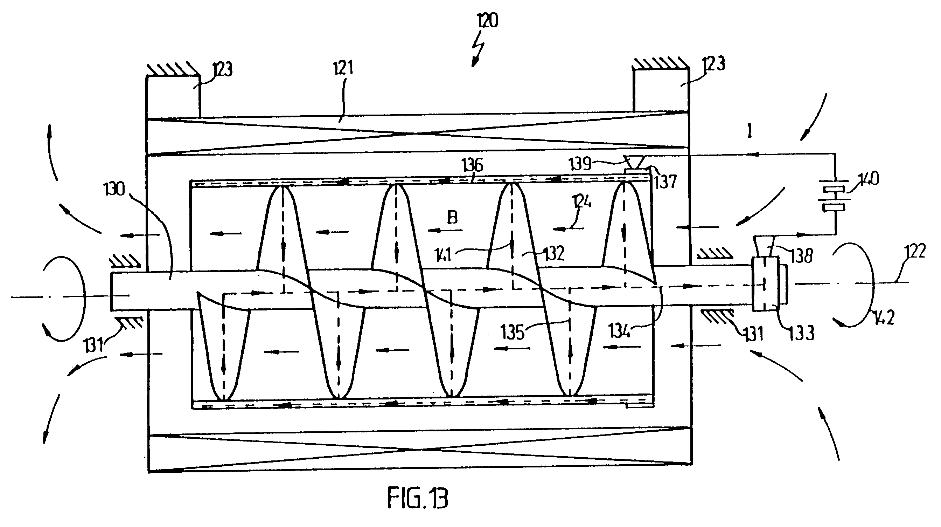

In Fig. 13 bezeichnet 120 insgesamt eine Antriebseinheit für Wasserfahrzeuge.

Eine Solenoidspule 121 ist um eine Achse 122 herum rotationssymmetrisch angeordnet. Die Solenoidspule 121 kann eine resistive, d.h. normal leitende Spule, oder aber auch eine supraleitende Spule sein, wozu weitere Einzelheiten in den Fig. der Übersichtlichkeit halber nicht dargestellt sind.

Die Solenoidspule 121 ist an einer Außenseite eines Wasserfahrzeuges angeordnet, so daß ihr Innenraum vom Umgebungswasser ausgefüllt ist.

Mit 123 ist eine raumfeste Halterung der Solenoidspule 121 am Schiffskörper angedeutet, um zu verdeutlichen, daß die Solenoidspule 121 undrehbar ist.

Mit 124 sind die Feldlinien des von der Solenoidspule 121 erzeugten magnetischen Feldes B bezeichnet. Die Feldlinien 124 verlaufen im Inneren der Solenoidspule 121 im wesentlichen in axialer Richtung und werden erst im Außenraum der Solenoisspule 121 in eine radiale Richtung umgelenkt, wie dies an sich bekannt ist.

Eine Welle 130 erstreckt sich koaxial zur Solenoidspule 121 entlang der Achse 122. Die Welle 130 ist in raumfesten Lagern 131 drehbar gelagert. Sie trägt eine Schraube 132, die im dargestellten Ausführungsbeispiel eine archimedische Spirale ist.

An dem in Fig. 13 rechten Ende trägt die Welle 130 einen ersten Schleifring 133, der mit einer ersten elektrischen Leitung 134 verbunden ist. Die erste elektrische Leitung 134 durchsetzt die Welle 130 in axialer Richtung. Von der ersten elektrischen Leitung 134 gehen radiale Stichleitungen 135 ab, die sich durch Flügel der Schraube hindurch erstrecken.

Die freien Enden der Flügel der Schraube 132 sind von einem zylindrischen Rohr 136 umgeben, das mit der Schraube 132 und damit auch mit der Welle 130 drehstarr verbunden ist.

Das Rohr 136 ist in axialer Richtung elektrisch leitfähig, entweder dadurch, daß axial verlaufende elektrische Leitungen verlegt sind, wie dies mit der ersten elektrischen Leitung 134 in der Welle 130 der Fall ist, oder indem das Rohr 136 teilweise oder insgesamt leitfähig ist.

Wichtig bei der vorstehend erläuternden Konfiguration ist alleine, daß die Flügel der Schraube 132 in radialer Richtung stromdurchflossen sind, während im übrigen die Leitung des elektrischen Stromes in axialer Richtung durch die Welle 130 und durch das Rohr 136 in unterschiedlichster Weise ausgeführt sein kann.

Am Rohr 136 befindet sich ein zweiter Schleifring 137. Mit Bürsten 138 bzw. 139 wird ein elektrischer Kontakt zu den Schleifringen 133 bzw. 137 hergestellt. Die Bürsten 138, 139 sind an eine erste Spannungsquelle 140 angeschlossen.

Wie mit einem Pfeil 141 angedeutet, werden die radialen Stichleitungen 135 auf diese Weise von Strom durchflossen, und zwar sämtlich bei der eingezeichneten Polarität von außen radial nach innen. Da andererseits die magnetischen Feldlinien 124 in Fig. 13 von rechts nach links gerichtet sind, bedeutet dies, wie ein Vergleich mit der Prinzipdarstellung der Fig. 12 zeigt, daß der Welle 130 ein Drehmoment in Uhrzeigerrichtung, von der linken Seite der Fig. 13 her betrachtet, mitgeteilt wird.

Auf diese Weise wird die Schraube 132 gedreht und die Antriebseinheit 120 entwickelt einen Rückstoß.

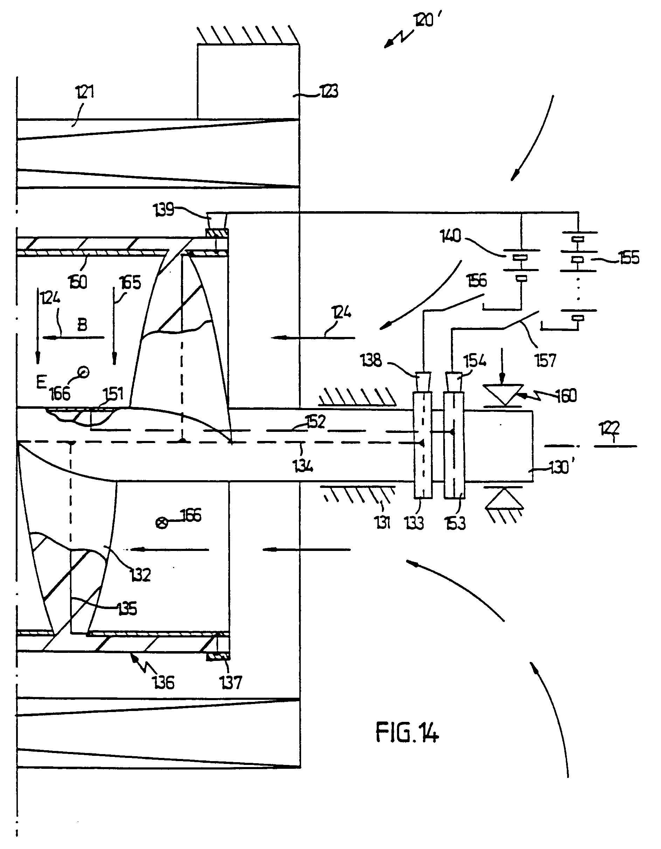

Fig. 14 zeigt das rechte stirnseitige Ende einer erfindungsgemäßen kombinierten Unipolar- und MHD-Antriebseinheit.

Wie man aus Fig. 14 erkennt, ist das Rohr 136 auf seiner innenzylindrischen Oberfläche mit einem ersten leitfähigen Belag 150 versehen, während die Welle 130' an ihrer außenzylindrischen Oberfläche einen zweiten leitfähigen Belag 151 trägt. Es versteht sich dabei, daß das Rohr 136' bzw. die Welle 130' auch insgesamt leitfähig, beispielsweise metallisch, ausgebildet sein können.

Eine zweite elektrische Leitung 152 erstreckt sich in axialer Richtung durch die Welle 130' und ist einerseits mit dem zweiten leitfähigen Belag 151 und andererseits einem dritten Schleifring 153 verbunden. Mittels einer dritten Bürste 154 wird der Kontakt zum dritten Schleifring 153 hergestellt.

Eine zweite Spannungsquelle 155 ist zwischen die dritte Bürste 154 und die zweite Bürste 139 geschaltet, die ihrerseits galvanisch mit dem ersten leitfähigen Belag 150 verbunden ist.

Während die erste Spannungsquelle 140 so ausgelegt ist, daß ein möglichst hoher Strom I (vgl. Fig. 13) durch die radialen Stichleitungen 135 fließt, ist die zweite Spannungsquelle 155 so ausgelegt, daß eine möglichst hohe Spannung zwischen den leitfähigen Belägen 150, 151 erzeugt wird. Auf diese Weise wird ein radial gerichtetes elektrisches Feld erzeugt, dessen Feldlinien 165 sich in radialer Richtung zwischen den leitfähigen Belägen 150, 151 erstrecken.

Mittels Schaltern 156, 157 kann einmal die erste Spannungsquelle 140 und zum anderen die zweite Spannungsquelle 155 in ihren jeweiligen Stromkreis eingeschaltet werden.

Wenn der erste Schalter 156 geschlossen ist, fließt nur ein Gleichstrom I in der bereits erläuterten Weise über die radialen Stichleitungen 135 und die Antriebseinheit 120' arbeitet nach Art einer Unipolar-Maschine, wie bereits zu Fig. 13 erläutert wurde.

Alternativ dazu kann nun jedoch auf einen MHD-Antrieb umgeschaltet werden.

Hierzu wird zunächst eine Feststellbremse 160 angezogen, mit der die Welle 130' raumfest arretiert, d.h. drehstarr mit der Solenoidspule 121 verbunden werden kann. Nun wird bei geöffnetem ersten Schalter 156 der zweite Schalter 157 geschlossen. Zwischen den leitfähigen Belägen 150, 151 liegt nun eine hohe Gleichspannung und es bildet sich das elektrische Feld E mit den Feldlinien 165 aus.

Da die Feldlinien 124 des magnetischen Feldes B und die Feldlinien 125 des elektrischen Feldes E senkrecht aufeinander stehen und zwar in axialer bzw. in radialer Richtung, wird den Ionen des umgebenden Salzwassers eine Lorentz-Kraft mitgeteilt, die zirkular um die Achse 122 herum gerichtet ist. Dies ist bei 166 angedeutet, wo man erkennt, daß das Umgebungswasser in Uhrzeigerrichtung, in Fig. 14 von links betrachtet, umläuft.

Da die Flügel der Schraube 132 mit zur Achse 122 geneigten Leitflächen versehen sind, wird das Umgebungswasser auf seiner zirkularen Bahn zugleich in axialer Richtung umgelenkt und erzeugt damit ebenfalls einen Rückstoß auf die Antriebseinheit 120'.

## Patentansprüche

1. Verfahren zum Antreiben von Wasserfahrzeugen, bei dem in einem von Umgebungswasser durchströmten Rohr (13; 31; 136) ein magnetisches Feld (B) sowie ein elektrisches Feld (E) mit aufeinander im wesentlichen senkrecht stehenden Feldlinien (37, 41; 124, 165) erzeugt werden, derart, daß auf in dem Umgebungswasser befindliche Ladungsträger (22) eine Kraft (F) ausgeübt und diese Kraft (F) als Antriebskraft für das Wasserfahrzeug genutzt wird, dadurch gekennzeichnet, daß in dem Rohr (31; 136) ein axial gerichtetes Magnetfeld (B) sowie ein zwischen einer Achse (33; 122) des Rohres (31; 136) und dem Rohr (31; 136) radial gerichtetes elektrisches Feld (E) erzeugt wird, und daß das um die Achse (33; 122) umlaufende Umgebungswasser in eine axiale Richtung umgelenkt wird.

2. Wasserfahrzeug mit einem Schiffsrumpf (60, 61, 63, 65, 66) und einer am Schiffsrumpf (60, 61, 63, 65, 66) angeordneten magnetohydrodynamischen Antriebsvorrichtung, die ein von Umgebungswasser durchströmtes Rohr (13; 31; 136) umfaßt, wobei das Rohr (13; 31; 136) von einer Magnetspule (12; 32; 121) umgeben und in dem Rohr (13; 31; 136) mindestens eine mit einer Spannungsquelle (35; 140, 155) verbundene erste Elektrode (15; 34; 134, 151, 152) angeordnet ist, dadurch gekennzeichnet, daß die Magnetspule (32; 121) als Solenoidspule ausgebildet und im wesentlichen koaxial zum Rohr (31; 136) angeordnet ist, daß die erste Elektrode (34; 134, 151, 152) im wesentlichen in der Achse (33; 122) des Rohres (31, 136) angeordnet ist, daß das Rohr (31; 136) als zweite Elektrode geschaltet ist, und daß im Zwischenraum zwischen erster Elektrode (34; 134, 151, 152) und Rohr (31; 136) ein hydrodynamisches Antriebselement mit Leitelementen angeordnet ist, die eine zur Radialrichtung geeignete Ausrichtung aufweisen und die starr mit dem Rohr (31; 136) verbindbar sind, derart, daß auf in dem Umgebungswasser befindliche Ladungsträger (22) eine Kraft (F) ausgeübt und diese Kraft (F) als Antriebskraft für das Wasserfahrzeug genutzt wird.

3. Wasserfahrzeug nach Anspruch 2 oder 3, dadurch gekennzeichnet, daß an das Rohr (30) eine Ionisiereinheit (67) angeschlossen ist.

4. Wasserfahrzeug nach Anspruch 3, dadurch gekennzeichnet, daß mittels der Ionisiereinheit (67) dem Umgebungswasser eine dessen Leitfähigkeit erhöhende Substanz zugebbar ist.

5. Wasserfahrzeug nach einem oder mehreren der Ansprüche 2 bis 4, dadurch gekennzeichnet, daß die Leitelemente drehbar gelagert und an einen Antriebsmotor (69) anschließbar sind.

6. Wasserfahrzeug nach einem oder mehreren der Ansprüche 2 bis 5, dadurch gekennzeichnet, daß die auf die Ladungsträger (22) ausgeübte Kraft (F) in Abhängigkeit vom radialen Abstand von der Elektrode (34) einstellbar ist.

7. Wasserfahrzeug nach Anspruch 6, dadurch gekennzeichnet, daß der Verlauf der elektrischen Feldstärke (E) in Abhängigkeit vom radialen Abstand von der Elektrode (34) einstellbar ist.

8. Wasserfahrzeug nach Anspruch 6 oder 7, dadurch gekennzeichnet, daß der Neigungswinkel der Leitelemente in Abhängigkeit vom radialen Abstand von der Elektrode (34) einstellbar ist.

9. Wasserfahrzeug nach einem oder mehreren der Ansprüche 2 bis 8, dadurch gekennzeichnet, daß weitere Elektroden (56) im Streufeld (41) der Magnetspule (32a, 32b) angeordnet sind.

10. Wasserfahrzeug nach einem oder mehreren der Ansprüche 2 bis 9, dadurch gekennzeichnet, daß das Rohr (31') einen sich in Strömungsrichtung des Wassers vergrößernden Querschnitt hat.

11. Wasserfahrzeug nach Anspruch 10, dadurch gekennzeichnet, daß das Rohr (31') mit seitlichen Ansaugöffnungen (90) versehen ist.

12. Wasserfahrzeug nach einem oder mehreren der Ansprüche 2 bis 11, dadurch gekennzeichnet, daß das hydrodynamische Antriebselement von einer Unipolar-Maschine angetrieben wird, bei der ein von einem Strom (I) durchflossener Leiter (111; 135) durch ein von der Magnetspule erzeugtes Magnetfeld (B) bewegt wird, dessen Feldlinien (110; 124) stets im wesentlichen rechtwinkelig zur Richtung des Stromes (I) verlaufen, und daß vorzugsweise der Leiter (135) einerseits mit einer in einer Welle (30; 73) des hydrodynamischen Antriebselementes verlaufenden ersten Zuleitung (34; 76) und andererseits mit einer entlang des Rohres (36; 78) verlaufenden zweiten Zuleitung elektrisch verbunden ist.

13. Wasserfahrzeug nach Anspruch 12, dadurch gekennzeichnet, daß der Leiter (135) im wesentlichen radial zu einer Achse (122) der Schraube (132) verläuft.

14. Wasserfahrzeug nach Anspruch 13, dadurch gekennzeichnet, daß der Leiter (235) durch mindestens einen Flügel der Schraube (132) verläuft.

15. Wasserfahrzeug nach einem oder mehreren der Ansprüche 12 bis 14, dadurch gekennzeichnet, daß das Rohr (136) und die Schraube (132) drehstarr miteinander verbunden sind, und daß das Rohr (136) über einen ersten Schleifkontakt (137/139) mit einer raumfest angeordneten Spannungsquelle (140) elektrisch verbunden ist.

16. Wasserfahrzeug nach einem oder mehreren der Ansprüche 12 bis 15, dadurch gekennzeichnet, daß eine Welle (130) der Schraube (132) und die Schraube (132) drehstarr miteinander verbunden sind, und daß die Welle (130) über einen zweiten Schleifkontakt (133/138) mit einer raumfest angeordneten Spannungsquelle (140) elektrisch verbunden ist.

17. Wasserfahrzeug nach einem oder mehreren der Ansprüche 12 bis 16, dadurch gekennzeichnet, daß der Leiter im wesentlichen parallel zu einer Achse des hydrodynamischen Antriebselementes verläuft.

18. Wasserfahrzeug nach Anspruch 17, dadurch gekennzeichnet, daß der Leiter durch einen Bereich des Magnetfeldes außerhalb der Solenoidspule verläuft, in dem die magnetischen Feldlinien im wesentlichen radial zur Achse des hydrodynamischen Antriebselementes gerichtet sind.

19. Wasserfahrzeug nach Anspruch 18, dadurch gekennzeichnet, daß zwei Solenoidspulen gleichachsig und axial voneinander beabstandet angeordnet sind, und daß der Leiter in axialer Richtung im Zwischenraum zwischen den Solenoidspulen verläuft.

20. Wasserfahrzeug nach einem oder mehreren der Ansprüche 2, bis 19, dadurch gekennzeichnet, daß das hydrodynamische Antriebselement als Schnecke (36; 132) ausgebildet ist.

21. Wasserfahrzeug nach Anspruch 20, dadurch gekennzeichnet, daß die Schnecke (36; 132) die Gestalt einer archimedischen Spirale aufweist.

22. Wasserfahrzeug nach einem oder mehreren der Ansprüche 2 bis 21, dadurch gekennzeichnet, daß der Anstellwinkel der Leitelemente einstellbar ist.

23. Wasserfahrzeug nach Anspruch 22, dadurch gekennzeichnet, daß der Anstellwinkel in radialer Richtung einstellbar ist.

24. Wasserfahrzeug nach Anspruch 22 oder 23, dadurch gekennzeichnet, daß der Anstellwinkel in axialer Richtung einstellbar ist.

25. Wasserfahrzeug nach einem oder mehreren der Ansprüche 2 bis 24, dadurch gekennzeichnet, daß die Spannungsquelle (35; 140; 155) in ihrer Ausgangsspannung und/oder Polarität einstellbar ist.

26. Wasserfahrzeug nach einem oder mehreren der Ansprüche 2 bis 25, dadurch gekennzeichnet, daß die Solenoidspule (32; 121) eine supraleitende Spule ist.

27. Wasserfahrzeug nach Anspruch 26, dadurch gekennzeichnet, daß die Spule aus einem Hochtemperatur-Supraleiter besteht.

28. Wasserfahrzeug nach einem oder mehreren der Ansprüche 2 bis 27, dadurch gekennzeichnet, daß die aus Solenoidspule (32; 121; 171) und Rohr (31; 136) gebildete Antriebseinheit (30; 110; 130; 150) in einen Schiffsrumpf (60) integriert ist.

29. Wasserfahrzeug nach einem oder mehreren der Ansprüche 2 bis 28, dadurch gekennzeichnet, daß die aus Solenoidspule (32; 121) und Rohr (31; 136) gebildete Antriebseinheit (30; 110; 130; 150) an einem Ausleger (62) im Abstand von einem Schiffsrumpf (61) angeordnet ist.

30. Wasserfahrzeug nach einem oder mehreren der Ansprüche 2 bis 29, dadurch gekennzeichnet, daß die aus Solenoidspule (32; 121) und Rohr (31; 136) gebildete Antriebseinheit (30; 110; 130; 150) in einen Kiel (64) eines Schiffsrumpfes (63) integriert ist.

31. Wasserfahrzeug nach einem oder mehreren der Ansprüche 2 bis 30, dadurch gekennzeichnet, daß die aus Solenoidspule (32; 121) und Rohr (31; 136) gebildete Antriebseinheit (30; 110; 130; 150) zur Fahrtrichtung eines Schiffsrumpfes (65) geneigt, vorzugsweise schwenkbar (75, 76) angeordnet ist.

32. Wasserfahrzeug nach einem oder mehreren der Ansprüche 2 bis 31, dadurch gekennzeichnet, daß mehrere aus Solenoidspulen (32a, 32b; 121) und Rohr (31a, 31b; 136) gebildete Antriebseinheiten (30a, 30b; 110; 130; 150) auf einem gemeinsamen Gestell (150) angeordnet sind, derart, daß das gesamte magnetische Dipolmoment im wesentlichen Null ist.

33. Wasserfahrzeug nach Anspruch 32, dadurch gekennzeichnet, daß zwei Antriebseinheiten parallel nebeneinander auf dem Gestell angeordnet sind, daß die von den Solenoidspulen (32a, 32b) erzeugten Magnetfelder (52, 53) entgegengesetzt gerichtet sind, und daß die Leitelemente gleichsinnig geneigt und die elektrischen Felder entgegengesetzt gerichtet sind.

34. Wasserfahrzeug nach Anspruch 32, dadurch gekennzeichnet, daß zwei Antriebseinheiten parallel nebeneinander auf dem Gestell angeordnet sind, daß die von den Solenoidspulen (32a, 32b) erzeugten Magnetfelder (52, 53) entgegengesetzt gerichtet sind, und daß die Leitelemente gegensinnig geneigt und die elektrischen Felder gleichgerichtet sind.

35. Wasserfahrzeug nach einem oder mehreren der Ansprüche 2 bis 34, dadurch gekennzeichnet, daß die Magnetspule (32; 121) von einem Abschirmmantel (42) umgeben ist.

## Claims

1. Method for the propulsion of water vehicles with which in a pipe (13; 31; 136) through which surrounding water is streaming, a magnetic field (B) as well as an electric field (E) are produced with essentially perpendicular field lines (37, 41; 124, 165) in such a way that a force (F) is exercised upon the charge carriers (22) in the surrounding water and this force (F) is utilised as a propulsion force for the water vehicle, characterised in that, in the pipe (31; 136), an axially directed magnetic field (B) as well as, between an axis (33; 122) of the pipe (31; 136) and the pipe (31; 136) a radially directed electric field (E) are produced and that the surrounding water circulating about the axis (33; 122) is deflected in an axial direction.

2. Water vehicle with a hull (60, 61, 63, 65, 66) and a magneto-hydrodynamic propulsion device attached to the hull (60, 61, 63, 65, 66), comprising a pipe (13; 31; 136) through which surrounding water is streaming, whereby the pipe (13; 31; 136) is surrounded by a magnetic coil (12; 32; 121) and in the pipe (13; 31; 136) at least one first electrode (15; 34; 134, 151, 152) connected to a voltage source (35; 140, 155) is arranged, characterised in that the magnetic coil (32; 121) is configured as a solenoid coil and is arranged essentially coaxially to the pipe (31; 136), that the first electrode (34; 134; 151, 152) is arranged essentially in the axis (33; 122) of the pipe (31; 136), that the pipe (31; 136) is switched in as a second electrode, and that, in the intermediate space between the first electrode (34; 134; 151, 152) and pipe (31; 136) a hydrodynamic propulsion element with directing elements is arranged exhibiting an appropriate alignment with respect to the radial direction and which can be rigidly connected to the pipe (31; 136) in such a way that a force (F) is exerted upon charge carriers (22) in the surrounding water and that this force (F) is used as a propulsion force for the water vehicle.

3. Water vehicle according to claim 1 or 2, characterised in that an ionisation unit (67) is connected to the pipe (30).

4. Water vehicle according to claim 3, characterised in that by means of the ionisation unit (67) it is possible to introduce a substance into the surrounding water which increases its conductivity.

5. Water vehicle according to one or more of claims 2 to 4, characterised in that the directing elements are borne in a rotatable fashion and are connectable to a propulsion motor (69).

6. Water vehicle according to one or more of claims 2 to 5, characterised in that the force (F) exercised upon the charge carriers (22) is adjustable as a function of the radial distance from the electrode (34).

7. Water vehicle according to claim 6, characterised in that the dependence of the electric field strength (E) on the radial distance from the electrode (34) is adjustable.

8. Water vehicle according to claim 6 or 7, characterised in that the pitch angle of the directing elements is adjustable as a function of radial distance from the electrode (34).

9. Water vehicle according to one or more of claims 2 to 8, characterised in that further electrodes (56) are arranged in the stray field (41) of the magnet coil (32a, 32b).

10. Water vehicle according to one or more of claims 2 to 9, characterised in that the pipe (31') has an enlarged cross section in the flow direction of the water.

11. Water vehicle according to claim 10, characterised in that the pipe (31') is equipped with a side intake opening (90).

12. Water vehicle according to one or more of claims 2 to 11, characterised in that the hydrodynamic propulsion element is driven by a unipolar motor in which a conductor (111; 135) through which a current (I) is flowing, is moved through a magnetic field (B) produced by the magnet coil, the field lines (110; 124) of which always run essentially perpendicularly to the current (I) direction and that, preferentially, on the one hand, the conductor (135) is electrically connected to a first feed line (34; 76) which runs in a shaft (30; 73) of the hydrodynamic propulsion element and, on the other hand, to a second feed line running along the pipe (36; 78).

13. Water vehicle according to claim 12, characterised in that the conductor (135) runs essentially radially with respect to an axis of propeller (132).

14. Water vehicle according to claim 13, characterised in that the conductor (235) runs through at least one blade of the propeller (132).

15. Water vehicle according to one or more of claims 12 to 14, characterised in that the pipe (136) and the propeller (132) are rotationally rigidly connected to each other and that the pipe (136) is electrically connected via a first slip contact (137/139) to a voltage source (140) which is spatially fixed.

16. Water vehicle according to one or more of claims 12 to 15, characterised in that a shaft (130) of the propeller (132) and the propeller (132) are rotationally rigidly connected to each other and that the shaft (130) is electrically connected via a second slip contact (133/138) to a voltage source (140) which is spatially fixed.

17. Water vehicle according to one or more of claims 12 to 16, characterised in that the conductor runs essentially parallel to an axis of the hydrodynamic propulsion element.

18. Water vehicle according to claim 17, characterised in that the conductor extends through a region of the magnetic field outside the solenoid coil where the magnetic field lines are essentially directed radially with respect to the axis of the hydrodynamic propulsion element.

19. Water vehicle according to claim 18, characterised in that two solenoid coils are arranged along a common axis and are axially separated from each other and that the conductor runs in an axial direction in the intermediate space between the solenoid coils.

20. Water vehicle according to one or more of claims 2 to 19, characterised in that the hydrodynamic propulsion element is configured as a screw (36; 132).

21. Water vehicle according to claim 20, characterised in that the screw (36; 132) exhibits the form of an Archimedes' spiral.

22. Water vehicle according to one or more of claims 2 to 21, characterised in that the pitch angle of the directing elements is adjustable.

23. Water vehicle according to claim 22, characterised in that the pitch angle is adjustable in a radial direction.

24. Water vehicle according to claim 22 or 23, characterised in that the pitch angle is adjustable in an axial direction.

25. Water vehicle according to one or more of claims 2 to 24, characterised in that the voltage source (35; 140; 155) is adjustable with regard to its output voltage and/or polarity.

26. Water vehicle according to one or more of claims 2 to 25, characterised in that the solenoid coil (32; 121) is a superconducting coil.

27. Water vehicle according to claim 26, characterised in that the coil is made from a high temperature superconductor.

28. Water vehicle according to one or more of claims 2 to 27, characterised in that the propulsion unit (30; 110; 130; 150) configured from the solenoid coil (32; 121) and pipe (31; 136) is integrated into a ship's hull (60).

29. Water vehicle according to one or more of claims 2 to 28, characterised in that the propulsion unit (30; 110; 130; 150) configured from the solenoid coil (32; 121) and pipe (31; 136) is arranged on an extension (62) at a distance from a ship's hull (61).

30. Water vehicle according to one or more of claims 2 to 29, characterised in that the propulsion unit (30; 110; 130; 150) configured from the solenoid coil (32; 121) and pipe (31; 136) is integrated into a keel (64) of a ship's hull (63).

31. Water vehicle according to one or more of claims 2 to 30, characterised in that the propulsion unit (30; 110; 130; 150) configured from the solenoid coil (32; 121) and pipe (31; 136) is configured at an angle with respect to the drive direction of a ship's hull (65) preferentially in a swivelable fashion (75, 76).

32. Water vehicle according to one or more of claims 2 to 31, characterised in that the propulsion unit (30; 110; 130; 150) configured from the solenoid coil (32; 121) and pipe (31; 136) are arranged on a common frame (150) in such a way that the total magnetic dipole moment is essentially zero.

33. Water vehicle according to claim 32, characterised in that two propulsion units are arranged on the frame parallel to each other, that the magnetic fields (52, 53) produced by the solenoid coils (32a, 32b) are opposite to each other, that the directing elements are pitched in a common direction and that the electric fields are opposite to each other.

34. Water vehicle according to claim 32, characterised in that two propulsion units are arranged on the frame parallel to each other, that the magnetic fields (52, 53) produced by the solenoid coils (32a, 32b) are opposite to each other, that the directing elements are pitched in an opposite direction and that the electric fields are directed in a common direction.

35. Water vehicle according to one or more of claims 2 to 34, characterised in that the magnet coil (32; 121) is surrounded by a shield cover (42).

## Revendications

1. Procédé pour la propulsion de navires, dans lequel on génère dans un tube (13 ; 31 ; 136) traversé par de l'eau ambiante un champ magnétique (B) ainsi qu'un champ électrique (E) avec des lignes de champ (37, 41 ; 124, 165) sensiblement perpendiculaires les unes aux autres, de telle sorte qu'une force (F) est exercée sur des porteurs de charge (22) situés dans l'eau ambiante, et que cette force (F) est utilisée comme force de propulsion pour le navire, caractérisé en ce qu'on établit dans le tube (31 ; 136) un champ magnétique (B) dirigé axialement ainsi qu'un champ électrique (E) dirigé radialement entre un axe (33 ; 122) du tube (31 ; 136) et le tube (31 ; 136), et en ce que l'eau ambiante entourant l'axe (33 ; 122) est renvoyée dans une direction axiale.

2. Navire comportant une coque (60, 61, 63, 65, 66) et un dispositif de propulsion magnétohydrodynamique agencé sur la coque (60, 61, 63, 65, 66), qui comporte un tube (13 ; 31 ; 136) traversé par de l'eau ambiante, le tube (13 ; 31 ; 136) étant entouré par une bobine magnétique (12 ; 32 ; 121) et au moins une première électrode (15 ; 34 ; 134, 151, 152) connectée à une source de tension (35 ; 140, 155) étant agencée dans le tube (13 ; 31 ; 136), caractérisé en ce que la bobine magnétique (32 ; 121) est réalisée sous forme d'une bobine solénoïde et agencée sensiblement coaxialement au tube (31 ; 136), en ce que la première électrode (34 ; 134, 151, 152) est agencée sensiblement dans l'axe (33 ; 122) du tube (31 ; 136), en ce que le tube (31 ; 136) est branché comme seconde électrode, et en ce qu'il est prévu dans l'intervalle entre la première électrode (34 ; 134, 151, 152) et le tube (31 ; 136) un élément de propulsion hydrodynamique comportant des éléments conducteurs qui présentent une orientation inclinée par rapport à la direction radiale et qui peuvent être connectés de façon rigide au tube (31 ; 136), de telle sorte qu'une force (F) est exercée sur les porteurs de charge (22) situés dans l'eau ambiante, et que cette force (F) est utilisée comme force propulsive pour le navire.

3. Navire selon l'une ou l'autre des revendications 2 et 3, caractérisé en ce qu'une unité d'ionisation (67) est connectée au tube (30).

4. Navire selon la revendication 3, caractérisé en ce qu'une substance augmentant la conductivité de l'eau ambiante peut être ajoutée à celle-ci au moyen de l'unité d'ionisation (67).

5. Navire selon l'une ou plusieurs des revendications 2 à 4, caractérisé en ce que les éléments conducteurs sont montés en rotation et peuvent être connectés à un moteur d'entraînement (69).

6. Navire selon l'une ou plusieurs des revendications 2 à 5, caractérisé en ce que la force (F) exercée sur les porteurs de charge (22) est réglable en dépendance de la distance radiale de l'électrode (34).

7. Navire selon la revendication 6, caractérisé en ce que la courbe de l'intensité de champ électrique (E) est réglable en dépendance de la distance radiale de l'électrode (34).

8. Navire selon l'une ou l'autre des revendications 6 et 7, caractérisé en ce que l'angle d'inclinaison des éléments conducteurs est réglable en dépendance de la distance radiale de l'électrode (34).

9. Navire selon l'une ou plusieurs des revendications 2 à 8, caractérisée en ce que d'autres électrodes (56) sont agencées dans le champ de dispersion (41) de la bobine magnétique (32a, 32b).

10. Navire selon l'une ou plusieurs des revendications 2 à 9, caractérisé en ce que le tube (31') présente une section transversale qui s'agrandit en direction d'écoulement de l'eau.

11. Navire selon la revendication 10, caractérisé en ce que le tube (31') est pourvu d'ouvertures d'aspiration latérales (90).

12. Navire selon l'une ou plusieurs des revendications 2 à 11, caractérisé en ce que l'élément de propulsion hydrodynamique est entraîné par une machine unipolaire dans laquelle un conducteur (111 ; 135) traversé par un courant (I) est déplacé par un champ magnétique (B) généré par la bobine magnétique, dont les lignes de champ (110 ; 124) s'étendent en permanence sensiblement à angle droit par rapport à la direction du courant (I), et en ce que de préférence le conducteur (135) est connecté électriquement d'une part à une première ligne d'amenée (34 ; 76) s'étendant dans un arbre (30 ; 73) de l'élément de propulsion hydrodynamique, et d'autre part à une seconde ligne d'amenée s'étendant le long du tube (36 ; 78).

13. Navire selon la revendication 12, caractérisé en ce que le conducteur (135) s'étend sensiblement radialement par rapport à l'axe (122) de l'hélice (132).

14. Navire selon la revendication 13, caractérisé en ce que le conducteur (235) s'étend au moins à travers une pale de l'hélice (132).

15. Navire selon l'une ou plusieurs des revendications 12 à 14, caractérisé en ce que le tube (136) et l'hélice (132) son reliés l'un à l'autre solidairement en rotation, et en ce que le tube (136) est électriquement connecté via un premier contact à trottement (137/139) à une source de tension fixe (140).

16. Navire selon l'une ou plusieurs des revendications 12 à 15, caractérisé en ce qu'un arbre (130) de l'hélice (132) et l'hélice (132) sont reliés l'un à l'autre solidairement en rotation, et en ce que l'arbre (130) est électriquement connecté via un second contact à frottement (133/138) à une source de tension fixe (140).

17. Navire selon l'une ou plusieurs des revendications 12 à 16, caractérisé en ce que le conducteur s'étend sensiblement parallèlement à un axe de l'élément de propulsion hydrodynamique.

18. Navire selon la revendication 17, caractérisé en ce que le conducteur s'étend à travers une zone du champ magnétique à l'extérieur de la bobine solénoïde, dans laquelle les lignes de champ magnétique sont dirigées sensiblement radialement par rapport à l'axe de l'élément de propulsion hydrodynamique.

19. Navire selon la revendication 18, caractérisé en ce que deux bobines solénoïdes sont agencées à axe égal et axialement à distance l'une de l'autre, et en ce que le conducteur s'étend en direction axiale dans l'intervalle entre les bobines solénoïdes.

20. Navire selon l'une ou plusieurs des revendications 2 à 19, caractérisé en ce que l'élément de propulsion hydrodynamique est réalisé sous forme d'une vis (36 ; 132).

21. Navire selon la revendication 20, caractérisé en ce que la vis (36 ; 132) présente la forme d'une vis d'Archimède.

22. Navire selon l'une ou plusieurs des revendications 2 à 21, caractérisé en ce que l'angle de disposition des éléments conducteurs est réglable.

23. Navire selon la revendication 22, caractérisé en ce que l'angle de disposition est réglable en direction radiale.

24. Navire selon l'une ou l'autre des revendications 22 et 23, caractérisé en ce que l'angle de disposition est réglable en direction axiale.

25. Navire selon l'une ou plusieurs des revendications 2 à 24, caractérisé en ce que la source de tension (35 ; 140 ; 155) est réglable quant à sa tension de départ et/ou à sa polarité.

26. Navire selon l'une ou plusieurs des revendications 2 à 25, caractérisé en ce que la bobine solénoïde (32 ; 121) est une bobine supraconductrice.

27. Navire selon la revendication 26, caractérisé en ce que le bobine est constituée par un supraconducteur à haute température.

28. Navire selon l'une ou plusieurs des revendications 2 à 27, caractérisé en ce que l'unité de propulsion (30 ; 110 ; 130 ; 150) formée par la bobine solénoïde (32 ; 121 ; 171) et par le tube (31 ; 136) est intégrée dans une coque de navire (60).

29. Navire selon l'une ou plusieurs des revendications 2 à 28, caractérisé en ce que l'unité de propulsion (30 ; 110 ; 130 ; 150) formée par la bobine solénoïde (32 ; 121 ; 171) et par le tube (31 ; 136) est agencée sur un bras (62) à distance d'une coque de navire (61).

30. Navire selon l'une ou plusieurs des revendications 2 à 29, caractérisé en ce que l'unité de propulsion (30 ; 110 ; 130 ; 150) formée par la bobine solénoïde (32 ; 121 ; 171) et par le tube (31 ; 136) est intégrée dans une quille (64) d'une coque de navire (63).

31. Navire selon l'une ou plusieurs des revendications 2 à 30, caractérisé en ce que l'unité de propulsion (30 ; 110 ; 130 ; 150) formée par la bobine solénoïde (32 ; 121 ; 171) et par le tube (31 ; 136) est agencée inclinée par rapport à la direction de déplacement d'une coque de navire (65), de préférence en basculement (75, 76).

32. Navire selon l'une ou plusieurs des revendications 2 à 31, caractérisé en ce que plusieurs unités de propulsion (30a, 30b ; 110 ; 130 ; 150) formées par des bobines solénoïdes (32a, 32b ; 121) et par le tube (31a, 31b ; 136) sont agencées sur un bâti commun (150), de telle sorte que le couple dipolaire magnétique global est sensiblement égal à zéro.

33. Navire selon la revendication 32, caractérisé en ce que deux unités de propulsion sont agencées parallèlement l'une à côté de l'autre sur le bâti, en ce que les champs magnétiques (52, 53) produits par les bobines solénoïdes (32a, 32b) sont dirigés en sens opposé, et en ce que les éléments conducteurs sont inclinés dans le même sens et les champs électriques sont dirigés en sens opposé.

34. Navire selon la revendication 32, caractérisé en ce que deux unités de propulsion sont agencées parallèlement l'une à côté de l'autre sur le bâti, en ce que les champs magnétiques (52, 53) produits par les bobines solénoïdes (32a, 32b) sont dirigés en sens opposé, et en ce que les éléments conducteurs sont inclinés en sens opposé et les champs électriques sont dirigés dans le même sens.

35. Navire selon l'une ou plusieurs des revendications 2 à 34, caractérisé en ce que la bobine magnétique (32 ; 121) est entourée par une enveloppe de blindage (42).
